(19) **Europäisches Patentamt / European Patent Office / Office européen des brevets**

(11) **EP 3 782 839 B1**

(12) **EUROPEAN PATENT SPECIFICATION**

(45) Date of publication and mention of the grant of the patent:
**23.11.2022 Bulletin 2022/47**

(21) Application number: **20173478.7**

(22) Date of filing: **07.05.2020**

(51) International Patent Classification (IPC):
**B60K 28/02** $^{(2006.01)}$

(52) Cooperative Patent Classification (CPC):
**B60K 28/02;** B60W 2300/10; B60W 2540/01;
B60W 2540/041; B60W 2540/221; B60W 2540/223

(54) **IN-VEHICLE FALL PREVENTION DEVICE AND FALL PREVENTION INFORMATION PROVIDING DEVICE**

VORRICHTUNG ZUR STURZPRÄVENTION IN EINEM FAHRZEUG UND VORRICHTUNG ZUR BEREITSTELLUNG VON INFORMATIONEN ZUR STURZPRÄVENTION

DISPOSITIF DE PRÉVENTION DE CHUTE EMBARQUÉ ET DISPOSITIF DE FOURNITURE D'INFORMATIONS DE PRÉVENTION DE CHUTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.05.2019 JP 2019090117**
**06.04.2020 JP 2020068578**

(43) Date of publication of application:
**24.02.2021 Bulletin 2021/08**

(73) Proprietors:
• **AISIN CORPORATION**
  **Aichi 448-8650 (JP)**
• **Oguri, Koji**
  **Aichi-ken 475-0873 (JP)**

(72) Inventors:
• **YAMAGUCHI, Hideaki**
  **KARIYA-SHI, AICHI-KEN 448-8650 (JP)**
• **YUMISASHI, Mariko**
  **KARIYA-SHI, AICHI-KEN 448-8650 (JP)**
• **OGURI, Koji**
  **HANDA-SHI, AICHI-KEN 475-0873 (JP)**

(74) Representative: **Cabinet Beau de Loménie**
**158, rue de l'Université**
**75340 Paris Cedex 07 (FR)**

(56) References cited:
DE-A1-102017 001 052     DE-A1-102018 007 432
DE-A1-102018 007 558     JP-A- 2016 062 414

**Description**

TECHNICAL FIELD

This invention relates to an in-vehicle fall prevention device and a fall prevention information providing device.

BACKGROUND DISCUSSION

In the related art, there is a vehicle (for example, a bus) in which a plurality of users can get on and off as easily available means of transportation. Generally operated buses (for example, route buses and the like) have a plurality of seats and the users can sit thereon during traveling, but there are many cases where the bus travels with more users than the number of seats. In this case, the user who cannot sit on the seat boards the bus in a standing state without holding something in the passage in the vehicle compartment of the bus, or boards the bus in a standing state with holding a strap or a handrail. As described above, there is a concern that the user standing without sitting on the seat falls depending on a traveling state of the bus. For example, there is a case where physical abilities of elderly people have decreased and there is a high possibility of falling. Therefore, a system has been suggested that controls the traveling state of the vehicle based on the attributes (age, gender, height, and the like) of the user (passenger). Further, a device for performing physical ability determination has also been proposed.

However, the ease of fall is easily affected by the physical ability of the user, for example, the scale of the balance ability. For example, there are some users having high physical ability and high balance ability even among elderly people. Conversely, even among non-elderly people, in a case where the user has some illness, has a large luggage, holds a child, and stands in a vehicle, there is a case where it is difficult to maintain balance. In other words, there is a case where the physical ability temporarily deteriorates. Therefore, in a case where traveling control is performed based on the attributes (age, gender, height, and the like) of the user, there is a possibility that even non-elderly people fall. In addition, as the use by elderly people increases with the recent aging of the population, when the traveling control is performed based on the age of the user, the excessively safe traveling control is performed, the smooth operation of the vehicle is hindered, and there is a problem that deterioration of service is caused.

Thus, a need exists for an in-vehicle fall prevention device that can improve the estimation accuracy of a possibility of falling of a user in a vehicle, reduce the occurrence of falling, and perform appropriate traveling control. Another object is to provide a fall prevention information providing device that can provide fall prevention information for performing fall prevention.

DE 102018007432 discloses a method for operating a bus.

JP 2016062414 discloses an in-vehicle monitoring device and an in-vehicle monitoring system.

SUMMARY

An in-vehicle fall prevention device according to an aspect of this invention includes, for example, of getting on and off; an ability estimation unit that estimates a physical ability value for each of the users based on the captured boarding motion; a risk degree determination unit that determines a fall risk degree of the user based on the physical ability value; a determination unit that determines whether or not a boarding posture corresponding to the fall risk degree is satisfied, for each of the users who boarded the vehicle; and a control unit that executes departure control of the vehicle based on a determination result of the determination unit. According to this configuration, for example, from the boarding motion in which the user steps up the stepped part at a gate, information indicating the physical ability of the user, such as lower limb muscle strength, balance strength, and instantaneous power, can be acquired, and the physical ability value is can be estimated. Then, based on the physical ability value, the fall risk degree is determined, and in a case where the user satisfies the boarding posture corresponding to the determined fall risk degree, for example, in a case where it is confirmed that the user is sitting on the seat or gripping the handrail or the strap, the departure control of the vehicle is executed. As a result, it is possible to reduce the possibility that the user falls due to shaking at the time of the departure.

In the in-vehicle fall prevention device according to the aspect, for example, the ability estimation unit may refer to an item storage unit that stores motion feature items with scores for each motion that the user is capable of taking during boarding, and estimate the physical ability value from a total value of the scores of the motion feature items corresponding to the motion taken by the user during boarding. According to this configuration, for example, the physical ability of the user can be objectively evaluated and estimated. As a result, the accuracy of the fall risk degree can be improved, and the possibility of occurrence of fall can be further reduced.

In the in-vehicle fall prevention device according to the aspect, for example, the ability estimation unit may estimate the physical ability value by using a model formula determined based on a motion indicator indicating a motion having a high degree of influence on the physical ability value among motions that the user is capable of taking during boarding. According to this configuration, for example, while reducing the estimation calculation load when estimating the physical ability value, by using the model formula that selectively adopts the motion having a high degree of influence, it is possible to suppress deterioration of the estimation accuracy of the physical ability value.

The in-vehicle fall prevention device according to the aspect, for example, may further include a first fall storage unit that stores first fall information in which the fall risk degree of a faller and the motion feature item when estimating the physical ability value are associated with each other, in a case where the departure control of the vehicle is executed based on the determination result of the determination unit and falling occurs, and the ability estimation unit may change the score for each of the motion feature items stored in the item storage unit based on the first fall information. According to this configuration, for example, in a case where falling has occurred, the score determined for each motion feature item is changed to, for example, a higher score. In other words, learning of the score is performed due to the occurrence of the falling, and the estimation accuracy of the physical ability can be improved. As a result, it is possible to improve the accuracy of determining the fall risk degree.

The in-vehicle fall prevention device according to the aspect, for example, may further include a second fall storage unit that stores second fall information in which the fall risk degree of a faller and the total value of the scores when estimating the physical ability value are associated with each other, in a case where the departure control of the vehicle is executed based on the determination result of the determination unit and falling occurs, and the risk degree determination unit may change and store a relation table in which a relation between the total value of the scores and the fall risk degree is determined, based on the second fall information. According to this configuration, for example, in a case where falling has occurred, the relation table is changed such that the rank of the fall risk degree determined based on the total score indicating the physical ability value increases. In other words, learning is performed to review the fall risk degree due to the occurrence of the falling, and the accuracy of determining the fall risk degree can be improved.

In the in-vehicle fall prevention device according to the aspect, for example, the risk degree determination unit may transmit the determined fall risk degree to an external system that determines an operation mode of the vehicle. According to this configuration, for example, it becomes possible to collect information on the fall risk degree for each user who uses the vehicle. As a result, it becomes possible to use the collected information to, for example, examine the change of the specifications (for example, the number of seats and the height of entrance) of vehicles used for operation into those suitable for the user, and to examine the change of the operation schedule and operation route, and it is possible to contribute to improving operation services.

In the in-vehicle fall prevention device according to the aspect, for example, the control unit may output guide information that makes the user take the boarding posture corresponding to the fall risk degree, in a case where there is the user whose boarding posture corresponding to the fall risk degree is not satisfied. According to this configuration, for example, it becomes easy for the user to smoothly take a safe boarding posture, and safe departure control of the vehicle can be realized more smoothly.

A fall prevention information providing device according to another aspect of this disclosure, which is not covered by the claimed invention, includes, for example, an acquisition unit that acquires a captured image obtained by imaging an ascending and descending motion of a user when the user who uses a passage including a stepped part ascends and descends the stepped part; an ability estimation unit that estimates a physical ability value of the user based on the captured ascending and descending motion; a risk degree determination unit that determines a fall risk degree of the user based on the physical ability value; and an output unit that outputs fall prevention information including the fall risk degree to an external system. According to this configuration, for example, based on the ascending and descending motion in which the user ascends and descends the stepped part, information indicating the physical ability of the user, such as lower limb muscle strength, balance strength, and instantaneous power, can be acquired, and the physical ability value is can be estimated. Then, the fall risk degree can be determined based on the physical ability value, and the fall prevention information can be provided in advance to, for example, vehicles or facilities to be used by the user. As a result, fall prevention measures (countermeasures) can be taken in advance in vehicles or facilities, and more appropriate fall prevention measures (countermeasures) can be taken while using vehicles or facilities.

In the fall prevention information providing device according to the aspect, which is not covered by the claimed invention, for example, the ability estimation unit may refer to an item storage unit that stores motion feature items with scores for each motion that the user is capable of taking when ascending and descending the stepped part, and estimate the physical ability value from a total value of the scores of the motion feature items corresponding to the motion taken by the user during the ascending and descending. According to this configuration, for example, the physical ability of the user can be objectively evaluated and estimated. As a result, the accuracy of the fall risk degree can be improved, and the possibility of occurrence of fall can be further reduced.

In the fall prevention information providing device according to the aspect, which is not covered by the claimed invention, for example, the ability estimation unit may estimate the physical ability value by using a model formula determined based on a motion indicator indicating a motion having a high degree of influence on the physical ability value among motions that the user is capable of taking during the ascending and descending. According to this configuration, for example, while reducing the estimation calculation load when estimating the physical ability value, by using the model formula that selectively adopts the motion having a high degree of influence, it is possible to suppress deterioration of the estimation accuracy of the physical ability value.

In the fall prevention information providing device according the aspect, which is not covered by the claimed invention, for example, the output unit may output the fall prevention information to a vehicle that the user is predicted to board or a management system of the vehicle. According to this configuration, for example, in the vehicle that has a risk of falling during use, the fall prevention information can be effectively used, and for a subject who has high possibility of falling in the vehicle, for example, it becomes possible to ensure the seat or change the traveling content, and it is possible to contribute to improving the operation service.

BRIEF DESCRIPTION OF THE DRAWINGS

The foregoing and additional features and characteristics of this invention will become more apparent from the following detailed description considered with the reference to the accompanying drawings, wherein:

Fig. 1 is an exemplary and schematic perspective view describing a configuration of a bus as an example of a vehicle on which an in-vehicle fall prevention device according to a first embodiment can be installed;
Fig. 2 is a schematic and exemplary block diagram illustrating a configuration of a vehicle control system including the in-vehicle fall prevention device according to the first embodiment;
Fig. 3 is a schematic and exemplary block diagram illustrating a configuration in a case where the in-vehicle fall prevention device (in-vehicle fall prevention unit) according to the first embodiment is realized by a CPU;
Fig. 4 is an exemplary and schematic explanatory view illustrating a motion feature item referred to in a case of estimating a physical ability value and a score corresponding to a motion item value, in the in-vehicle fall prevention device according to the first embodiment;
Fig. 5 is an exemplary and schematic explanatory view illustrating a relation table in which a relation between a total score value indicating the physical ability value and a fall risk degree, and a relation between the fall risk degree and a vehicle departure possibility determination condition are determined, in the in-vehicle fall prevention device according to the first embodiment;
Fig. 6 is an exemplary and schematic explanatory view illustrating a relation table in which a relation between a physical ability index calculated by using a model formula and a fall risk degree, and a relation between the fall risk degree and a vehicle departure condition are determined, in the in-vehicle fall prevention device according to the first embodiment;
Fig. 7 is a flowchart illustrating an example of a process flow in a case where departure control of the vehicle is executed based on the physical ability value of the user of the vehicle, in the in-vehicle fall prevention device according to the first embodiment;
Fig. 8 is an exemplary and schematic view illustrating that fall prevention information provided by a fall prevention information providing device according to a second embodiment, which is not covered by the claimed invention, is provided to a vehicle (for example, a bus) and used;
Fig. 9 is a schematic and exemplary block diagram illustrating a configuration in a case where the fall prevention information providing device (fall prevention information providing unit) according to the second embodiment is realized by a CPU;
Fig. 10 is an exemplary and schematic explanatory view illustrating a motion feature item referred to in a case of estimating a physical ability value and a score corresponding to a motion item value, in the fall prevention information providing device according to the second embodiment;
Fig. 11 is an exemplary and schematic explanatory view illustrating a relation table in which a relation between a total score value indicating the physical ability value and a fall risk degree is determined, in the fall prevention information providing device according to the second embodiment;
Fig. 12 is an exemplary and schematic explanatory view illustrating a relation table in which a relation between a physical ability index calculated by using a model formula and a fall risk degree is determined, in the fall prevention information providing device according to the second embodiment;
Fig. 13 is a flowchart illustrating an example a process flow of estimating the physical ability value of a user passing through a stepped part, determining the fall risk degree, and outputting the fall prevention information, in the fall prevention information providing device according to the second embodiment; and
Fig. 14 is an exemplary and schematic view illustrating that the fall prevention information provided by the fall prevention information providing device according to the second embodiment is provided to a vehicle (for example, an electric train) and used.

## DETAILED DESCRIPTION

Hereinafter, an exemplary embodiment disclosed here will be disclosed. The configurations of the embodiments illustrated below, and the operations, results, and effects provided by the configurations are examples. The invention can be realized by configurations other than the configurations disclosed in the following embodiment, and at least one of various effects based on the basic configuration and derivative effects can be obtained.

First Embodiment

First, as a first embodiment, an in-vehicle fall prevention device will be described. The in-vehicle fall prevention device according to the first embodiment realizes departure control of a vehicle to prevent or reduce fall of a user who has boarded the vehicle, in the vehicle in which a plurality of users can get on and off, for example, a route bus (hereinafter, simply referred to as a "bus"). For example, in a case of a bus, even in a case of excluding sudden braking, the balance tends to be lost at the time of departure acceleration, and there is a possibility of falling. In a case of the user who easily falls, it is considered that the ability to maintain a constant posture, such as lower limb muscle strength, balance strength, and instantaneous power, of has deteriorated. In general, lower limb muscle strength, balance strength, instantaneous power, and the like deteriorates with age, but there are some users whose physical abilities temporarily deteriorate regardless of age. For example, even though a user who has injury or a disease such as illness, a user who has a large luggage or holds a child, and the like, has sufficient lower limb muscle strength, balance strength, instantaneous power, and the like, there are cases where the users are not able to fully exhibit the strength during boarding in the vehicle. As a result, it becomes difficult to maintain the posture. In other words, there is a case where the physical ability temporarily deteriorates and the user easily falls.

As described above, in a case of a user whose physical ability has deteriorated, for example, when the user steps on a step (stepped part) when boarding the bus and lifts the upper body and gets on, there is a case of unconsciously taking a motion to support the upper body and stabilize the posture. For example, the user unconsciously grasps surrounding objects such as handrails. In addition, in order to keep balance, there is a case where the stepping motion or the motion of lifting the upper body is unconsciously slowed down. Similarly, even after completing stepping up the steps, the user unconsciously grasps the surrounding objects, slows down the next step, and unconsciously widens the stride (distance between the left and right feet when standing up) to maintain the posture. By imaging the motion as the user gets on the bus and analyzing the boarding motion, the in-vehicle fall prevention device estimates (unconscious) behavioral features for complementing the deterioration of own physical ability and the scale of the physical function related to falling, and uses the estimated behavioral features and physical ability as a reference for determining the fall risk degree. In other words, the physical ability of the user is objectively evaluated and estimated regardless of attributes such as age and gender. Then, the fall risk degree based on the estimation of the physical ability value is reflected in the departure control of the vehicle.

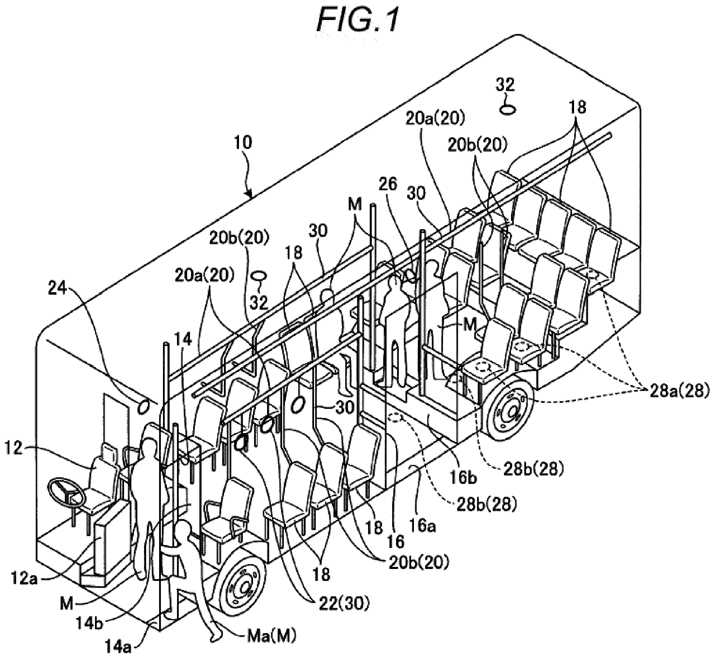

Fig. 1 is an exemplary and schematic perspective view of a vehicle 10 (for example, a bus) on which the in-vehicle fall prevention device according to the first embodiment is installed. A vehicle 10 may be, for example, an automobile (internal combustion engine automobile) having an internal combustion engine (engine, not illustrated) as a driving source, an automobile (electric car, fuel battery car, and the like) having an electric motor (motor, not illustrated) as a driving source, or an automobile (hybrid automobile) having both the internal combustion engine and the electric motor as a driving source. In addition, in the vehicle 10, various transmission devices can be installed, and various devices (systems, components, and the like) necessary for driving the internal combustion engine or the electric motor can be installed.

As illustrated in Fig. 1, the vehicle 10 has a driving seat 12 disposed on one side of a front part of the vehicle and an entrance 14 (for example, gate) on the other side of the front part of the vehicle. A step 14a which is one step higher than the road surface is provided at the entrance 14, and, for example, a user M (Ma) who steps on the step 14a can get on the vehicle by opening an opening/closing door 14b. Further, another entrance 16 (for example, an exit) is provided at the vehicle middle part of the vehicle 10, and the user can, for example, step down a step 16a and get off by opening an opening/closing door 16b.

A plurality of seats 18 are installed in the vehicle compartment of the vehicle 10. For example, the seats 18 are installed in a row one by one along the side of the vehicle compartment in the front region of the vehicle 10, the seats 18 are installed one by one or two by two depending on the location in the rear region, and five seats 18 are disposed in a vehicle width direction in the most tail region. In addition, a plurality of handrails 20 are installed in the vehicle compartment. The handrail 20 is formed of, for example, a metal round bar. The handrail 20 is provided with a horizontal handrail 20a parallel to the top surface, and a vertical handrail 20b fixed to the floor surface or the top surface, and a part of the seat 18. Further, the horizontal handrail 20a is provided with straps 22 (only a part thereof is illustrated) provided with a ring-shaped grip portion at a constant interval, for example.

In the vehicle compartment of the vehicle 10, an imaging unit 24 for imaging the user Ma who gets on from the entrance 14 (gate) is installed, for example, on a top surface above the entrance 14. The imaging unit 24 is, for example, a digital camera having a built-in imaging device such as a charge coupled device (CCD) or a CMOS image sensor (CIS). The imaging unit 24 sequentially acquires moving image data at a predetermined frame rate and outputs the acquired moving image data as captured image data. In addition, the imaging unit 24 may be an infrared camera that images an infrared image emitted by a human body. The imaging region of the imaging unit 24 is, for example, a range in which the behavior of the user Ma who desires to get on from the entrance 14 can be imaged. The imaging region of the imaging unit 24 includes, for example, a region outside the vehicle (a region of 1 to 2 m outside the vehicle) where the user Ma can be imaged before the getting-on motion, and a door region where the user Ma who performs a motion of stepping on the step 14a and lifting the upper body can be imaged. Furthermore, the imaging region of the imaging unit 24 includes an in-vehicle region or the like that passes through the side of a farebox 12a beside the driving seat 12 and enters the seat region where the seats 18 are arranged. In addition, regarding the imaging unit 24, one imaging unit 24 may image all of the above-described region outside the vehicle, the door region, and the in-vehicle region, or the imaging units 24 may be provided for each region.

In a case of the vehicle 10, an imaging unit 26 similar to the imaging unit 24 may be installed at a position corresponding to the entrance 16. The in-vehicle fall prevention device of the first embodiment can monitor whether or not falling has occurred until the user gets off the vehicle 10 after boarding the vehicle. Therefore, the imaging unit 26 is mainly used for acquiring an image for confirming that the user who is a fall monitoring target gets off, that is, the completion of monitoring. In addition, in a case of the vehicle 10 having a specification in which the user boards from the entrance 16, the imaging unit 26 functions in the same manner as the imaging unit 24, and images the behavior of the user Ma who desires to get on from the entrance 16.

The vehicle 10 is installed with a plurality of sensors for acquiring the boarding posture of a user M in the vehicle compartment. For example, pressure sensors 28 (seat sensor 28a) for detecting whether or not the user M is sitting on the seat 18 are provided for each seat 18. Further, the pressure sensors 28 (floor sensors 28b) for detecting the standing position of the user M in the vehicle compartment are arranged at a constant interval (for example, in a matrix shape) on the floor. A grip sensor 30 (for example, a capacitive sensor, a pressure sensor, or the like) for detecting whether or not the user M is gripping the strap 22 is disposed at a ring portion of the strap 22. Similarly, the grip sensor 30 is also installed on the handrail 20 (the horizontal handrail 20a and the vertical handrail 20b), and detects whether or not the user M is gripping the handrail 20. In addition, an imaging unit 32 for detecting the position of the user M in the vehicle compartment after boarding the vehicle and whether or not the falling has occurred is installed on a ceiling or the like in the vehicle compartment of the vehicle 10. In a case of Fig. 1, two imaging units 32 each having an imaging range of the front seat region and the rear seat region are installed, but the number of units to be installed can be appropriately changed. The determination as to whether or not the user M has fallen can be made, for example, by detecting whether or not the user M has put the hand on the floor by image analysis or the like. In addition, based on the detection result of the floor sensor 28b, a movement (for example, the moving speed) of the center of gravity of the body is detected, and in a case where the movement exceeds a predetermined threshold value, it may be considered that the body is shaking greatly (staggered greatly) and has lost balance, that is, has fallen.

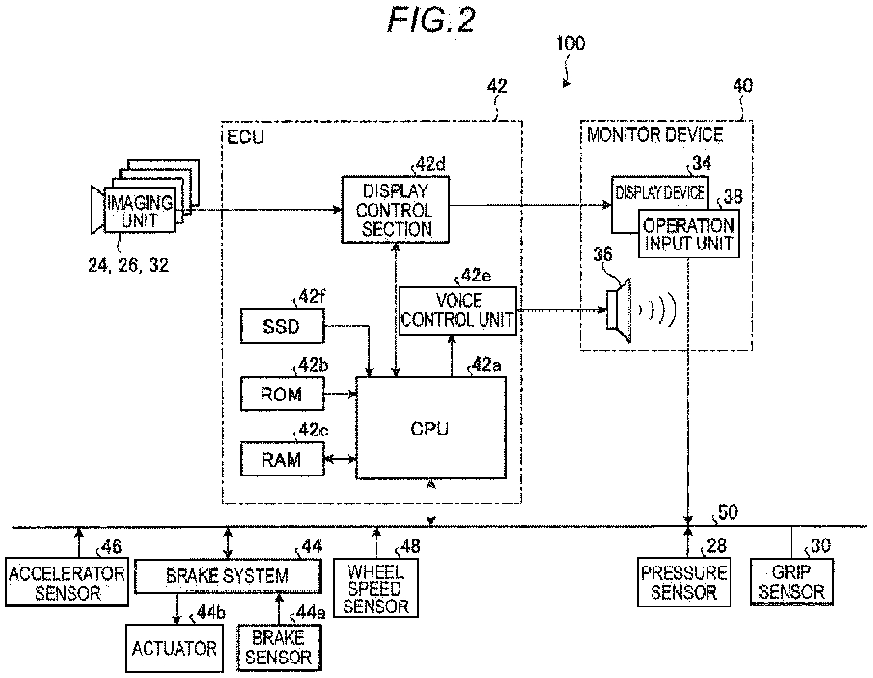

Fig. 2 is an exemplary block diagram of a configuration of a vehicle control system 100 including the in-vehicle fall prevention device installed on the vehicle 10. A display device 34 and a voice output device 36 are provided in the vehicle compartment of the vehicle 10. The display device 34 is, for example, a liquid crystal display (LCD), an organic electroluminescent display (OELD), or the like. The voice output device 36 is, for example, a speaker. In addition, the display device 34 may be covered with a transparent operation input unit 38, such as a touch panel. A driver (or occupant) can visually recognize an image (for example, the boarding state, whether or not the falling has occurred, and the guide information) displayed on the display screen of the display device 34 via the operation input unit 38. In addition, the driver can execute the operation input by operating the operation input unit 38 with a finger or the like by touching, pressing, or moving the operation input unit, at a position that corresponds to an image displayed on the display screen of the display device 34. The display device 34, the voice output device 36, the operation input unit 38, and the like are provided in, for example, a monitor device 40 installed in the driving seat of the vehicle 10. The monitor device 40 can include an operation input unit (not illustrated) such as a switch, a dial, a joystick, and a push button.

As illustrated in Fig. 2, the vehicle control system 100 (including the in-vehicle fall prevention device) includes, in addition to the imaging units 24, 26, and 32 and the monitor device 40, an ECU 42 (electronic control unit), a brake system 44 (brake sensor 44a, actuator 44b), an accelerator sensor 46, a wheel speed sensor 48, the pressure sensor 28, the grip sensor 30, and the like, which are electrically connected to each other via an in-vehicle network 50 as an electric communication line. The in-vehicle network 50 is configured, for example, as a controller area network (CAN). The ECU 42 can control the brake system 44 and the like by sending a control signal through the in-vehicle network 50. In addition, the ECU 42 can receive detection results of the brake sensor 44a, the accelerator sensor 46, the wheel speed sensor 48, the pressure sensor 28, the grip sensor 30, and the like, operation signals of the operation input unit 38, and the like, via the in-vehicle network 50.

The brake system 44 operates the actuator 44b so as to brake the vehicle 10 by performing braking control when the vehicle 10 normally travels as automatic control based on the operation of a brake pedal of the driver or the detection result of various sensors starting from the brake sensor 44a. Further, in a case of the first embodiment, in a case where the boarding posture of the user M (Ma) who is a monitoring target by the in-vehicle fall prevention device does not satisfy the departure condition, the ECU 42 operates the actuator 44b to suppress the departure. The accelerator sensor 46 is a sensor for detecting the amount of operation of the accelerator pedal by the driver, and when the vehicle normally travels, the engine and motor are controlled based on the detection value detected by the accelerator sensor 46, and acceleration/deceleration control of the vehicle 10 is executed. In addition, in a case where the boarding posture of the user M (Ma) who is a monitoring target by the in-vehicle fall prevention device does not satisfy the departure condition, the brake system 44 performs the braking control (for example, control for maintaining the stopped state) regardless of the detection value of the accelerator sensor 46. The wheel speed sensors 48 are sensors provided on each wheel of the vehicle 10 for detecting the amount of rotation of each wheel and the rotational speed per unit time, and output the number of wheel speed pulses indicating the detected rotational speed as a detection value. The ECU 42 calculates the vehicle speed and the movement amount of the vehicle 10 based on the detection value acquired from the wheel speed sensor 48, and detects whether or not the vehicle 10 has moved. Further, in a case where the boarding posture of the user M (Ma) who is a monitoring target by the in-vehicle fall prevention device does not satisfy the departure condition, based on the detection result of the wheel speed sensor 48, the CPU 42a confirms that the vehicle 10 has not departed or confirms that the traveling is started at an acceptable low speed or low acceleration rate. In addition, Fig. 2 illustrates a configuration related to the description of the in-vehicle fall prevention device, and the description and drawings of other configurations required in a case where the vehicle 10 travels will be omitted.

The ECU 42 includes, for example, a CPU 42a (central processing unit), a ROM 42b (read only memory), a RAM 42c (random access memory), a display control section 42d, a voice control unit 42e, and an SSD 42f (solid state drive, flash memory), and the like. The CPU 42a realizes the in-vehicle fall prevention device (in-vehicle fall prevention unit) and controls the vehicle 10. The CPU 42a can read a program installed and stored in a non-volatile storage device, such as the ROM 42b, and can execute arithmetic processing in accordance with the program. The RAM 42c temporarily stores various pieces of data used in the calculation by the CPU 42a. The display control section 42d provides the captured image data acquired from the imaging unit 24 and the like to the CPU 42a, and processes the image data to be displayed on the display device 34. In addition, the voice control unit 42e mainly executes processing of voice data output from the voice output device 36 in the arithmetic processing in the ECU 42. In addition, the SSD 42f is a rewritable non-volatile storage unit, and can store data even in a case where the power of the ECU 42 is turned off. For example, a motion feature item to be referred to in a case of estimating the physical ability value, a relation table to be referred to in a case of determining the fall risk degree, and the like are stored. Further, in a case where fall of the user M is found in the vehicle 10, information on the fallen user M is stored. The CPU 42a, the ROM 42b, the RAM 42c and the like can be integrated in the same package. Further, the ECU 42 may be configured to use another logical operation processor, such as a digital signal processor (DSP), or a logic circuit, instead of the CPU 42a. In addition, a hard disk drive (HDD) may be provided instead of the SSD 42f, and the SSD 42f or the HDD may be provided separately from the ECU 42.

The configuration, disposition, electrical connection, and the like of the various sensors and actuators described above are merely examples, and can be set (changed) in various manners.

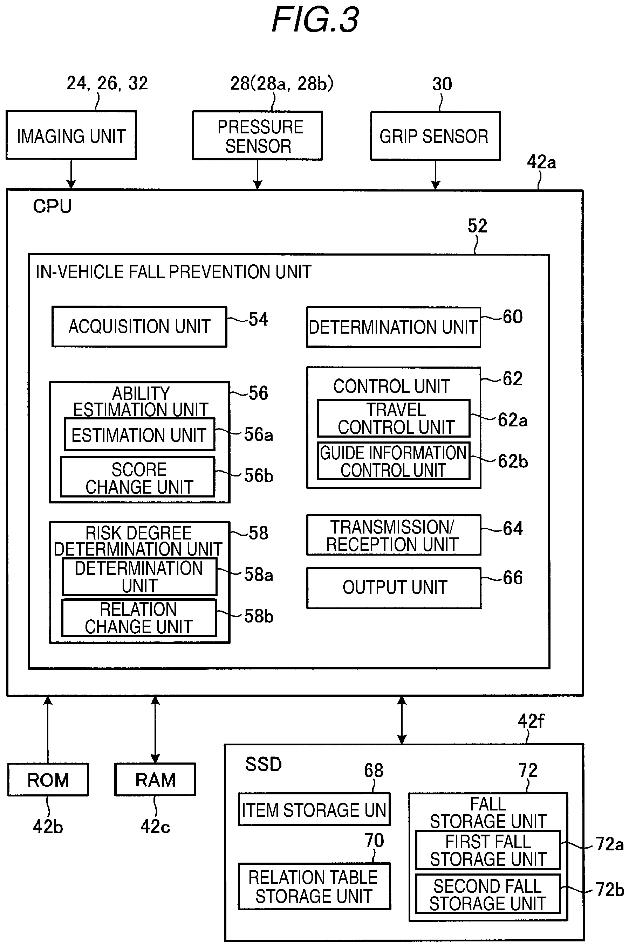

Fig. 3 is an exemplary and schematic block diagram illustrating a configuration in a case where the CPU 42a realizes the in-vehicle fall prevention device. The CPU 42a realizes the in-vehicle fall prevention unit 52 by executing the in-vehicle fall prevention control program read from the ROM 42b. The in-vehicle fall prevention unit 52 (in-vehicle fall prevention device) includes various modules for realizing the function thereof. The in-vehicle fall prevention unit 52 includes, for example, modules such as an acquisition unit 54, an ability estimation unit 56, a risk degree determination unit 58, a determination unit 60, a control unit 62, a transmission/reception unit 64, and an output unit 66. The ability estimation unit 56 includes detailed modules such as an estimation unit 56a and a score change unit 56b. The risk degree determination unit 58 includes detailed modules such as a determination unit 58a and a relation change unit 58b. The control unit 62 includes detailed modules such as a travel control unit 62a and a guide information control unit 62b.

The acquisition unit 54 sequentially acquires the captured image data (captured image) obtained by imaging by each of the imaging units 24, 26, and 32 via the display control section 42d. For example, the imaging unit 24 can sequentially image the behavior of the user Ma who desires to board from the entrance 14 and the behavior of the user M who is present around the entrance 14. The imaging unit 26 can sequentially image, for example, the behavior of the user M who desires to get off from the entrance 16 and the user M who is present around the entrance 16. The imaging unit 32 can sequentially image the behavior of the user M who is present in a region including the outside of the imaging range of the imaging unit 24 or the imaging unit 26, for example, the front seat region or the rear seat region. Each of the imaging units 24, 26, and 32 may be provided in the acquisition unit 54 by attaching an identification code for identifying an imaging location (imaging region), an imaging time, and the like to the captured image data, and may attach the identification code to each captured image data acquired by the acquisition unit 54.

The ability estimation unit 56 extracts the user Ma from the captured image by performing image analysis with respect to the captured image data acquired by the acquisition unit 54, for example, the captured image data obtained by imaging by the imaging unit 24, and attaches the personal identification code to each user Ma. Then, the ability estimation unit 56 performs a detailed analysis of the boarding motion of the user Ma who has been individually identified, performs evaluation with respect to each individual motion, and estimates the physical ability value of the user Ma. Specifically, the estimation unit 56a of the ability estimation unit 56 refers to an item storage unit 68 that stores the scored motion feature items for each motion that the user Ma can take during the boarding. Then, the estimation unit 56a sequentially adds scores corresponding to the motion feature items that have been confirmed among the motions of the user Ma, and sets (estimates) the total value of the scores as the physical ability value of the user Ma. The item storage unit 68 has a storage region ensured in, for example, the SSD 42f which is a rewritable non-volatile storage unit.

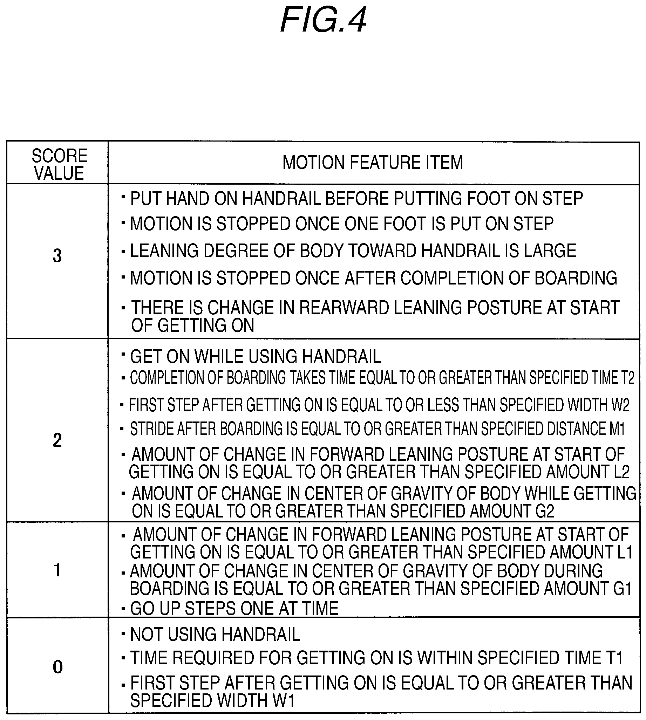

Fig. 4 illustrates an example of the motion feature items stored in the item storage unit 68. As illustrated in Fig. 4, a plurality of motion feature items and scores to be added in a case where the motion is confirmed are stored in association with each other. The score illustrated in Fig. 4 is defined such that, for example, the higher the physical ability, the lower the numerical value.

In a case where the motion of the user Ma who goes up the step 14a and enters the vehicle compartment is acquired in the captured image data of the imaging unit 24 acquired by the acquisition unit 54, the estimation unit 56a collates the motion and the motion feature item stored in the item storage unit 68 with each other. For example, in the estimation unit 56a, when the user Ma goes up the step 14a and enters the vehicle compartment, in a case where "not using a handrail", "time required for getting on is within the specified time T1", "first step after getting on is equal to or greater than the specified width W1", and the like are confirmed, each motion feature item is one of the physical abilities necessary for executing a smooth boarding motion. In this case, the estimation unit 56a registers a score value "0" in a work region of the RAM 42c for each confirmed motion feature item as a score indicating the physical ability of the user Ma. Similarly, when the user Ma goes up the step 14a and enters the vehicle compartment, in a case where "the amount of change in the forward leaning posture at the start of getting on is equal to or greater than the specified value L1", "the amount of change in the center of gravity of the body during boarding is equal to or greater than the specified value G1", "go up the steps one at a time", and the like are confirmed, each motion feature item indicates a motion in which a slight slowness is recognized. Therefore, the user Ma can be considered as having a "slight deterioration of physical ability" as compared with the user Ma who can realize the motion feature item of score = 0. In this case, the estimation unit 56a registers a score value "1" in a work region of the RAM 42c for each confirmed motion feature item as a score indicating the physical ability of the user Ma.

Similarly, when the user Ma goes up the step 14a and enters the vehicle compartment, in a case where "get on the vehicle while using a handrail", "completion of boarding takes time equal to or greater than the specified time T2", "first step after getting on is equal to or less than the specified width W2", "stride after boarding is equal to or greater than the specified distance M1", "the amount of change in the forward leaning posture at the start of getting on is equal to or greater than the specified value L2", "the amount of change in the center of gravity of the body while getting on is equal to or greater than the specified value G2", and the like are confirmed, each motion feature item indicates a motion in which a remarkable slowness is recognized. Therefore, the user Ma can be considered as having a "moderate deterioration of physical ability" as compared with the user Ma who can realize the motion feature item of score = 0. In this case, the estimation unit 56a registers a score value "2" in a work region of the RAM 42c for each confirmed motion feature item as a score indicating the physical ability of the user Ma.

Furthermore, when the user Ma goes up the step 14a and enters the vehicle compartment, "put the hand on a handrail before putting the foot on the step", the motion is stopped once one foot is put on the step", "the leaning degree of the body toward the handrail is large", "the motion is stopped once after the completion of boarding ", "there is a change in the rearward leaning posture at the start of getting on" and the like are confirmed, each motion feature item indicates the motion for carefully balancing the body. Therefore, the user Ma can be considered as having a "large deterioration of physical ability" as compared with the user Ma who can realize the motion feature item of score = 0. In this case, the estimation unit 56a registers a score value "3" in a work region of the RAM 42c for each confirmed motion feature item as a score indicating the physical ability of the user Ma.

The estimation unit 56a calculates the total of the scores of the motion feature items that are confirmed in the getting-on motion of the user Ma imaged by the imaging unit 24, and sets the total score value s as the physical ability value of the user Ma. In this case, the larger the total score value s, the lower the physical ability.

The motion feature items illustrated in Fig. 4 are merely examples, and the number of items can be increased or decreased as appropriate. Further, the score for each motion feature item can be determined in advance by a test or the like, but even in a case where the physical ability value is estimated based on the total score value s, the fall risk degree is confirmed, and the departure control of the vehicle 10 is performed, there is a case where the falling occurs. Therefore, the score change unit 56b can change the score value for each motion feature item based on the actually occurred fall. The details of the processing by the score change unit 56b will be described later.

When the ability estimation unit 56 can estimate the physical ability value of the user Ma, the risk degree determination unit 58 determines the fall risk degree of the user Ma based on the physical ability value. The determination unit 58a of the risk degree determination unit 58 reads the relation table in which the relation between the total score value and the fall risk degree indicating the possibility of falling is determined, from a relation table storage unit 70, and determines the risk degree corresponding to the total score of the user Ma. The relation table storage unit 70 has a storage region ensured in, for example, the SSD 42f which is a rewritable non-volatile storage unit.

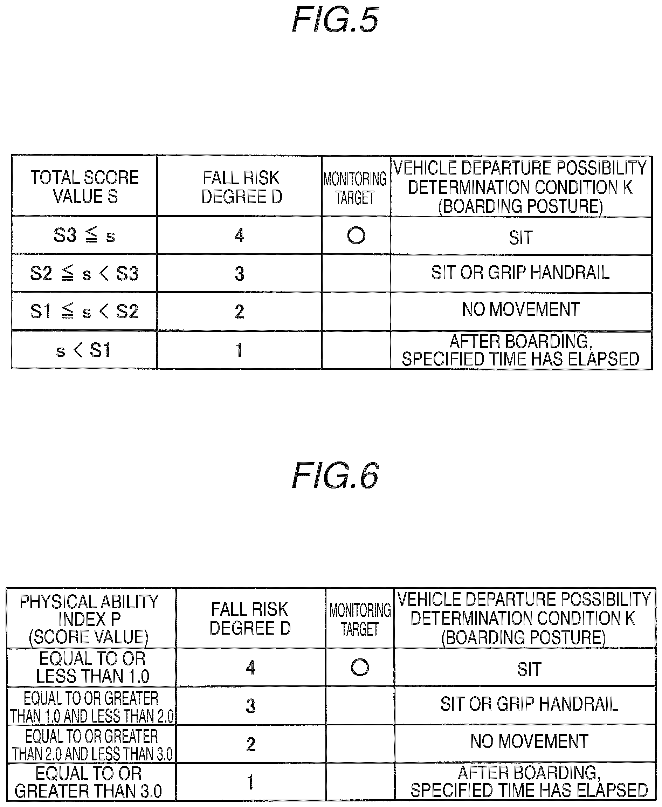

Fig. 5 illustrates an example of the relation table in which the relation between the total score value s indicating the physical ability value and the fall risk degree D, and the relation between the fall risk degree D and the vehicle departure possibility determination condition K (boarding posture) are determined, which are stored in the relation table storage unit 70. As illustrated in Fig. 5, the fall risk degree D corresponds to the total score value s having a certain width. In addition, the fall risk degree D illustrated in Fig. 5 is set such that, for example, the larger the total score value s, the higher the fall risk degree D, that is, the fall risk is high and the vehicle 10 is carefully departed.

In a case where the total score value s calculated by the estimation unit 56a is, for example, less than the specified value S1, the determination unit 58a determines the fall risk degree D to be "1". In a case where the fall risk degree D = 1, it is determined that the user Ma who has boarded the vehicle 10 has, for example, a physical ability that can withstand the shaking when the vehicle 10 is normally departed and travels even in a situation where the user has moved in the vehicle compartment. In addition, in a case where the total score value s is equal to or greater than the specified value S1 and less than the specified value S2 that is greater than the specified value S1, the determination unit 58a determines the fall risk degree D to be "2". In a case where the fall risk degree D = 2, for example, when the user Ma determines the standing position without moving in the vehicle compartment and stands still, it is determined that the user Ma can exhibit sufficient balance ability and has a physical ability that can withstand the shaking when the vehicle 10 is normally departed and travels. In addition, in a case where the total score value s is equal to or greater than the specified value S2 and less than the specified value S3 that is greater than the specified value S2, the determination unit 58a determines the fall risk degree D to be "3". In a case where the fall risk degree D = 3, when the user Ma is, for example, sitting on the seat 18 or gripping the handrail 20, it is determined that the user has a physical ability that can withstand the shaking when the vehicle 10 is normally departed and travels. In addition, in a case where the total score value s is equal to or greater than the specified value S3, the determination unit 58a determines the fall risk degree D to be "4". In a case where the fall risk degree D = 4, in a case where the user Ma is, for example, is in a standing posture, there is a high possibility of falling without withstanding the shaking when the vehicle 10 is normally departed and travels, and it is determined that it is desirable that the user sits on the seat 18. In this manner, since the risk degree determination unit 58 determines the physical ability value of the user Ma during boarding based on the boarding motion, it is possible to objectively and more accurately determine the fall risk degree D. For example, as compared with a case of "elderly person = high fall risk degree", the accuracy of the fall risk degree is improved, excessive execution of control or warning for preventing the fall is avoided, and the smoother departure (operation) control of the vehicle 10 can be performed.

In addition, the correspondence between the total score value s and the fall risk degree D illustrated in Fig. 5 is an example, and the correspondence range of the total score value s corresponding to the fall risk degree D may be made in more detail. In other words, the fall risk degree D may be classified in more detail. The correspondence between the total score value s and the fall risk degree D can be determined in advance by a test or the like, but even in a case where the departure control of the vehicle 10 is performed based on the fall risk degree D, there is a case where the falling occurs. Therefore, the relation change unit 58b can change the correspondence range of the total score value s with respect to the fall risk degree D based on the fall that has actually occurred. The details of the processing by the relation change unit 58b will be described later.

The determination unit 60 determines whether or not the boarding posture corresponding to the fall risk degree D is satisfied, for each user Ma (M) who has boarded the vehicle 10. In other words, it is determined whether or not the user M is in a boarding posture that can reduce the probability of occurrence of fall in the vehicle. In other words, when the boarding posture corresponding to the fall risk degree D is satisfied, the possibility determination condition for allowing the departure of the vehicle 10 becomes satisfied while suppressing the occurrence of fall of the user M in the vehicle. As described above, as the user M is given the personal identification code when the user is imaged by the imaging unit 24, and the personal identification code is tracked, it is possible to recognize the behavior of the user M in the vehicle. For example, by the image analysis of the captured image data imaged by the imaging units 24, 26, and 32, it is possible to detect whether or not the user M has moved in the vehicle compartment, whether or not the user is sitting on the seat 18, whether or not the user is gripping the handrail 20 or the strap 22, and the like. In other words, the boarding posture of the user M can be recognized based on the captured image data. In addition, it is possible to detect whether or not the user M is sitting on the seat 18 by the detection result of the pressure sensor 28 (seat sensor 28a, floor sensor 28b), the standing position in the vehicle, and the like. Similarly, it is possible to more accurately determine whether or not the user M is gripping the handrail 20 or the strap 22 based on the detection result of the grip sensor 30. In this manner, by using the detection result of the pressure sensor 28 and the grip sensor 30, the recognition accuracy of the boarding posture of the user M can be improved. In addition, without the imaging unit 32, it may also be possible to recognize the boarding posture (the posture using the handrail 20 or the strap 22, the posture of sitting on the seat 18, and the like) of the user M only by the detection results of the pressure sensor 28 and the grip sensor 30.

Fig. 5 exemplifies a correspondence relation between the fall risk degree D and the vehicle departure possibility determination condition K (boarding posture). In a case where the fall risk degree D = 1, the possibility determination condition K is associated with, for example, "after boarding, the specified time has elapsed". In other words, in a case of the user M with the fall risk degree D = 1, it is possible to determine that the user has, for example, a physical ability that can withstand the shaking when the vehicle 10 is normally departed and travels even in a situation where the user has moved in the vehicle compartment. Therefore, in a case where it is confirmed that the boarding is completed (the predetermined time has elapsed) regardless of the boarding posture of the user M, the determination unit 60 determines that the vehicle 10 can depart. In addition, in a case where the fall risk degree D = 2, the possibility determination condition K is associated with, for example, "no movement". In other words, in a case of the user M with the fall risk degree D = 2, for example, when the user determines the standing position without moving in the vehicle compartment and stands still, it is possible to determine that the user can exhibit sufficient balance ability and has a physical ability that can withstand the shaking when the vehicle 10 is normally departed and travels. Therefore, in a case where it is confirmed that the user M has completed the movement in the vehicle, the determination unit 60 determines that the vehicle 10 can depart.

In addition, in a case where the fall risk degree satisfies D = 3, the possibility determination condition K is associated with, for example, "sit or grip a handrail". In other words, in a case of the user M with the fall risk degree D = 3, for example, when the user is sitting on the seat 18 or gripping the handrail 20, it is possible to determine that the user has a physical ability that can withstand the shaking when the vehicle 10 is normally departed and travels. Therefore, in a case where it is confirmed that the user M is sitting on the seat 18 or gripping the handrail 20 or the strap 22, the determination unit 60 determines that the vehicle 10 can depart. In addition, in a case where the fall risk degree D = 4, the possibility determination condition K is associated with, for example, "sit". In other words, in a case of the user M with the fall risk degree D = 4, in a case where the user is, for example, is in a standing posture, there is a possibility of the fall without withstanding the shaking when the vehicle 10 is normally departed and travels, and it is possible to determine that it is desirable to sit on the seat 18. Therefore, in a case where it is confirmed that the user M is sitting on the seat 18, the determination unit 60 determines that the vehicle 10 can depart. In other words, in a case where there is a user M who has a high fall risk, the departure of the vehicle 10 is stopped until the sitting on the seat 18 is completed.

The control unit 62 executes the departure control of the vehicle 10 based on the determination result of the determination unit 60. The travel control unit 62a of the control unit 62 controls the actuator 44b of the brake system 44 and generates a braking force regardless of the presence or the absence of the stepping operation of the accelerator pedal by the driver, for example, until the possibility determination condition K is satisfied (until the boarding posture of the user M corresponding to the fall risk degree is satisfied). In other words, the departure of the vehicle 10 is suppressed. Further, the guide information control unit 62b outputs a guidance indicating that the departure is not allowed, to the display device 34 or the voice output device 36 via the output unit 66. For example, a message indicating that departure is not permitted is displayed on the display device 34, or a warning lamp is turned on. Further, a guide message, a warning sound, or the like may be output from the voice output device 36.

Incidentally, in a case where the plurality of users M have already boarded the vehicle and the inside of the vehicle is congested, even when the user M with the fall risk degree D = 3 or the fall risk degree D = 4 boards the vehicle, there are a case where the user cannot sit on the seat 18 and a case where the user cannot grip the handrail 20 or the strap 22. In this case, since the user M cannot satisfy the boarding posture corresponding to the fall risk degree D, the departure of the vehicle 10 is not easily permitted. Here, in a case where there is the user M who cannot satisfy the boarding posture corresponding to the fall risk degree D, the guide information control unit 62b of the control unit 62 can output the guide information such that the user M has the boarding posture corresponding to the fall risk degree D. The guide information control unit 62b can output the guide information for urging to yield up the seat 18 for the user M with a high fall risk degree D. For example, a message such as "since there is a customer who needs to have a seat, please yield up the seat" can be output from an in-vehicle compartment speaker or the like. In addition, the in-vehicle fall prevention unit 52 recognizes the fall risk degree D of the user M from the time of boarding by performing the image analysis with respect to the captured image data obtained by imaging by the imaging unit 24, and recognizes the boarding posture or the boarding position after the boarding of the user M (user Ma) by the imaging units 26 and 32, the pressure sensor 28, the grip sensor 30 and the like. Therefore, the guide information control unit 62b may output, for example, the guide information that urges the user M with a low fall risk degree D to yield up the seat 18 preferentially for the user M with a high fall risk degree D. The guide information can be stored in, for example, the ROM 42b or the SSD 42f. Further, the guide information control unit 62b may turn on a guide light such as an LED light provided individually for each seat 18 and request cooperation for yielding up the seat 18 in a form that is difficult for other users M to notice. In addition, the guide information control unit 62b may select the content of the guide information corresponding to the level of the fall risk degree D. Otherwise, the usage pattern (for example, for a certain period of time, the number of times of boarding of users M having a certain physical ability is large, or the like) of the vehicle 10 of the user M having each physical ability (fall risk degree D), may be learned, for example, and the number of priority seats that can be used preferentially by the user M having a low physical ability (high fall risk degree D), the size of the region of the standing position, and the like may be adjusted in advance. As a result, the boarding of the user M having a low physical ability (high fall risk degree D) can be performed more smoothly. In addition, the vehicle 10 can be smoothly departed. Further, the operation efficiency of the vehicle 10 can be improved.

In this manner, in the in-vehicle fall prevention device of the first embodiment, the user M with a high fall risk degree D has not taken the boarding posture corresponding to the fall risk degree D, and it is possible to reduce the delay of the departure of the vehicle 10, and to smoothly start the operation (departure) of the vehicle 10. In addition, as illustrated in Fig. 5, the control unit 62 can determine whether or not each fall risk degree D is a monitoring target. For example, with respect to all of the users M, in a case where the departure suppression of the vehicle 10 is performed until the boarding posture corresponding to the fall risk degree D is satisfied, there is a case where an efficient operation is hindered. Therefore, it is determined whether or not each fall risk degree D is a monitoring target. For example, the application of the vehicle departure possibility determination condition K may be excluded from the users M with the fall risk degrees D = 1 to 3. In this case, for example, an announcement to depart or an announcement to call attention to shaking may be made. In addition, for example, the monitoring target may designate all of the fall risk degrees D as a default, and may be changeable by the driver or the like of the vehicle 10 according to a predetermined rule (in Fig. 5, only the fall risk degree D = 4 is an example of a monitoring target).

As described above, there is a case where the falling occurs regardless of the departure of the vehicle 10 in a case where the vehicle departure possibility determination condition K is satisfied based on the fall risk degree D. The determination unit 60 can detect whether or not the user M (user Ma) has fallen in the vehicle, using the detection results of the imaging units 24, 26, and 32, the floor sensor 28b, and the like. The determination as to whether or not the user M (user Ma) has fallen can be detected, for example, by determining whether or not the hand is on the floor. In this case, in addition to the displacement of the upper body of the user M due to the image processing of the captured image data of the imaging units 24, 26, and 32, by the change and transition of the detection result of the floor sensor 28b, the recognition accuracy of the falling can be improved.

In a case where the falling of the user M has occurred, the determination unit 60 stores first fall information in which the fall risk degree D of the faller (user M) and the motion feature item when estimating the physical ability value are associated with each other, in a first fall storage unit 72a of the fall storage unit 72. In addition, the determination unit 60 stores second fall information in which the fall risk degree D of the faller and the total score value s when the physical ability value is estimated are associated with each other, in a second fall storage unit 72b of the fall storage unit 72. The fall storage unit 72 has a storage region ensured in, for example, the SSD 42f which is a rewritable non-volatile storage unit.

In a case where the vehicle 10 executes the departure control and the falling occurs based on the determination result of the determination unit 60, the ability estimation unit 56 estimates that the estimation of the physical ability value of the user M is insufficient. Therefore, the score change unit 56b can change the score for each motion feature item stored in the item storage unit 68 based on the first fall information stored in the first fall storage unit 72a. For example, the motion feature items adopted when estimating the physical ability value of the faller are "go up the steps one at a time" with score value = 1, "the amount of change in the center of gravity of the body during boarding is equal to or greater than the specified value G1" with score value = 1, and "get on the vehicle while using a handrail" with score value = 2, and the physical ability value is estimated by the total score value s = 4. In this case, there is a possibility that the physical ability of the faller has been overestimated. Therefore, the score change unit 56b changes the score value of "go up the steps one at a time" and "the amount of change in the center of gravity of the body during boarding is equal to or greater than the specified value G1" among the motion feature items, to be "2". In addition, the score value of "get on the vehicle while using a handrail" is changed to "3". In this case, along with the change of the score value, the score values of other motion feature items may be changed in conjunction with each other. With the change of the score value of "get on the vehicle while using a handrail" to "3", the score value of the motion feature item of "put the hand on a handrail before putting the foot on the step" with the original score value = 3 may be set to satisfy score value = 4 which is one rank higher (new setting of score value = 4). As described above, the estimation accuracy of the physical ability value can be improved by executing the learning processing of changing the score value of the motion feature item based on the fall that has actually occurred.

In addition, in a case where the vehicle 10 executes the departure control and the falling occurs based on the determination result of the determination unit 60, the risk degree determination unit 58 estimates that the determination of the fall risk degree D of the user M is inappropriate. Therefore, the relation change unit 58b can change the correspondence between the total score value s and the fall risk degree D which are stored in the relation table storage unit 70, based on the second fall information stored in the second fall storage unit 72b. For example, before the change, in a case where the total score value s is equal to or greater than the specified value S1 and less than the specified value S2, it is set that the fall risk degree D is determined to be "2". In this case, when the movement of the user M in the vehicle compartment is completed, the departure of the vehicle 10 is permitted. However, as a result, the user M with the fall risk degree D = 2 has fallen. Therefore, the relation change unit 58b executes the learning processing of changing the fall risk degree D to "3" in a case where the total score value s is equal to or greater than the specified value S1 and less than the specified value S2. As a result, the departure of the vehicle 10 is stopped until the user M satisfies more stabilized boarding posture, for example, the condition of "sit or grip a handrail" (departure is not permitted). As a result, the risk of occurrence of the falling of the user M can be reduced.

In addition, the score value or the correspondence may be changed by the score change unit 56b or the relation change unit 58b every time the fall of the user M occurs, but the possibility of occurrence of bias or the like in the change contents increases. Therefore, the score change unit 56b and the relation change unit 58b may perform the change (learning) at a stage where the statistical tendency is clear in a case where a predetermined number of samples are prepared or in a case where a predetermined period has elapsed. In this case, the in-vehicle fall prevention unit 52 can call the first fall information and the second fall information from the fall storage unit 72 and change the information based on the learned result. In another embodiment, the transmission/reception unit 64 may transmit the first fall information and the second fall information to an external system, for example, a system of a management center that manages the operation of the vehicle 10, perform learning on the management center side, and determine the contents to be changed. In this case, the contents to be changed determined by the management center is provided to the score change unit 56b or the relation change unit 58b via the transmission/reception unit 64. Then, the score change unit 56b or the score change unit 56b may change the contents of the item storage unit 68 or the relation table storage unit 70. In addition, the learning contents in the score change unit 56b or the relation change unit 58b may be automatically executed for each predetermined period, or the driver or the like may manually perform the change processing.

In addition, the transmission/reception unit 64 may transmit information on the physical ability value of the user M estimated by the ability estimation unit 56, information on the fall risk degree determined by the risk degree determination unit 58, information on the control of the vehicle 10 executed by the control unit 62, information on the provided guide information, and the like in association with the location, time, weather, and the like when the user M has boarded the vehicle, to the external system, such as the management center. From such information, it is possible to obtain distribution information such as a region or a time zone frequently used by a user having a high possibility of falling. Each piece of information transmitted to the external system such as the management center can be used as an examination material for changing the operation mode of the vehicle, for example, for changing the specification of the vehicle 10 used for the operation (for example, the number of seats, handrails, straps, and the like, the height of the entrance and the like) into an appropriate specification in accordance with the tendency of the user M. In addition, it is possible to use the information as the examination material such as an operation schedule that can reduce congestion and an operation route that can reduce the shaking during the operation. As a result, it is possible to realize a smoother operation of the vehicle 10 with a reduced fall risk. The transmission/reception unit 64 can transmit the captured image data acquired by the acquisition unit 54 to the external system such as the management center or the like, and the data may be used in analysis of the tendency (age, gender, amount of luggage, boarding position in the vehicle, and the like) of the user M (user Ma). By increasing the information of the user M, it is possible to more accurately examine the specifications or the operation schedule of the vehicle 10, the operation route, and the like.

In the description above, the estimation unit 56a of the ability estimation unit 56 calculates the total score value s by sequentially collating the getting-on motion of the user M obtained by analyzing the captured image data acquired by the acquisition unit 54 and the plurality of motion feature items stored in the item storage unit 68 with each other, and estimates the physical ability value. In another embodiment, the estimation unit 56a may use a model formula (multiple regression equation) created in advance based on a motion indicator (explanatory variable) indicating a motion having a high degree of influence on the physical ability value among motions that the user M can take during the boarding, and estimate the physical ability value. The model formula is, for example, as follows.

$$\text{physical ability index } p = \alpha 1 \times \text{motion indicator A} + \alpha 2 \times \text{motion indicator B} + \alpha 3 \times \text{motion indicator C} + \beta$$

Here, the physical ability index p is an objective variable in the multiple regression equation, $\alpha 1$, $\alpha 2$, and $\alpha 3$ are partial regression coefficients, the motion indicators A, B, and C are explanatory variables indicating a motion having a high degree of influence on the physical ability value, and $\beta$ is a constant term. As the contents of the motion indicators A, B, and C, the contents that can estimate a highly accurate physical ability value in a test performed in advance are appropriately selected. The motion indicator A is, for example, a stride when the user is on the step 14a of the vehicle 10. As the physical ability decreases, the motion of trying to widen the stride and obtain a sense of stability is more likely to be shown. The motion indicator B is, for example, a forward leaning amount of the upper body when climbing the step 14a. As the physical ability decreases, a motion of trying to take the forward leaning posture and to easily keep balance is likely to be shown. The forward leaning amount can be shown by, for example, a distance between the face and the knee, a rate of change in the distance, and the like. The motion indicator C is, for example, a time period until the next step is taken after climbing the step 14a. As the physical ability decreases, a motion of taking a break after one motion (for example, the motion of climbing the step 14a) is likely to be shown. In addition, the number of motion indicators (explanatory variables) in the multiple regression equation can be determined by verifying a plurality of samples in a test stage performed in advance. The partial regression coefficient is determined depending on the number of samples (database) in the test stage.

Fig. 6 illustrates the correspondence between the physical ability index p (score value) calculated by the above-described model formula and the fall risk degree D. When the physical ability index p (score value) is, for example, equal to or greater than 3.0, "1" is associated with the fall risk degree D. In a case where the fall risk degree D = 1, the possibility determination condition K is associated with, for example, "after boarding, the specified time has elapsed". Therefore, in a case where it is confirmed that the boarding is completed (the predetermined time has elapsed) regardless of the boarding posture of the user M, the determination unit 60 determines that the vehicle 10 can depart. In addition, in a case where the physical ability index p (score value) is, for example, equal to or greater than 2.0 and less than 3.0, "2" is associated with the fall risk degree D. In a case where the fall risk degree satisfies D = 2, the possibility determination condition K is associated with, for example, "no movement". Therefore, in a case where it is confirmed that the user M has completed the movement in the vehicle, the determination unit 60 determines that the vehicle 10 can depart.

In addition, in a case where the physical ability index p (score value) is, for example, equal to or greater than 1.0 and less than 2.0, "3" is associated with the fall risk degree D. For example, in a case where the fall risk degree D = 3, the possibility determination condition K is associated with, for example, "sit or grip a handrail". Therefore, in a case where it is confirmed that the user M is sitting on the seat 18 or gripping the handrail 20 or the strap 22, the determination unit 60 determines that the vehicle 10 can depart. In addition, in a case where the physical ability index p (score value) is, for example, equal to or less than 1.0, "4" is associated with the fall risk degree D. In a case where the fall risk degree D = 4, the possibility determination condition K is associated with, for example, "sit". Therefore, in a case where it is confirmed that the user M is sitting on the seat 18, the determination unit 60 determines that the vehicle 10 can depart. In addition, as illustrated in Fig. 6, the control unit 62 can determine whether or not each fall risk degree D is a monitoring target (in Fig. 6, only the fall risk degree D = 4 is an example of the monitoring target).

As described above, in a case where the model formula is used, the fall risk degree D is determined by calculating the physical ability index p (score value) only for the specific motion (several types of explanatory variables) of the user M, it is possible to reduce the processing load of the CPU 42a, and to more quickly determine the fall risk degree D. Meanwhile, in a case of estimating the physical ability value using the item storage unit 68, collation with each motion feature item becomes necessary, the processing load of the CPU 42a increases, but the boarding motion of the user M can be analyzed in more detail. As a result, the estimation accuracy of the physical ability value can be improved, and the reliability of the fall risk degree D can increase.

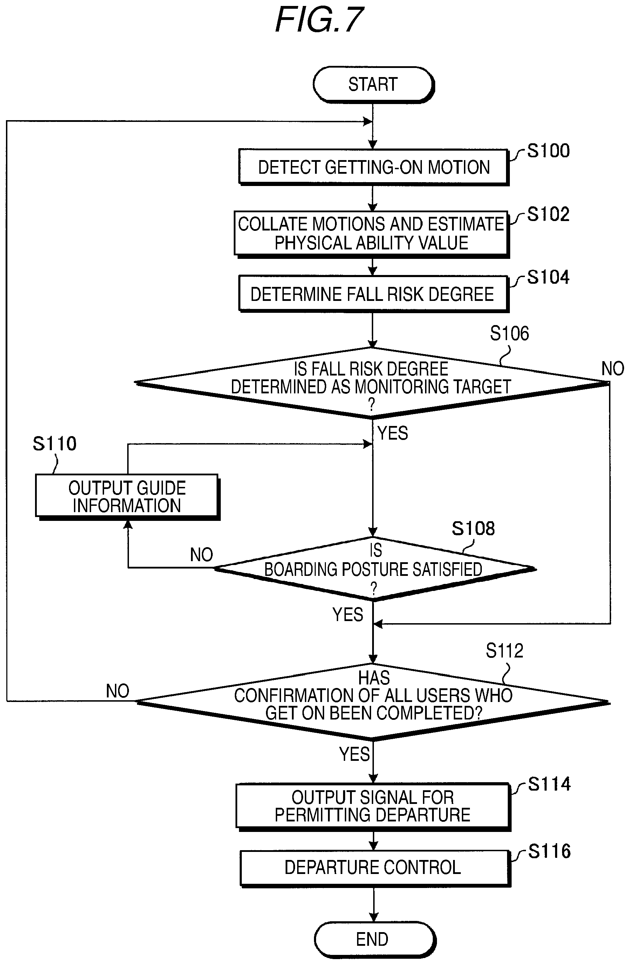

An example of the flow of the fall prevention processing by the in-vehicle fall prevention device (in-vehicle fall prevention unit 52) configured as described above, is described using the flowchart of Fig. 7. In addition, the flow of Fig. 7 is repeatedly executed at a predetermined processing cycle while the power of the vehicle 10 is ON. Further, in a case of the first embodiment, it is assumed that the imaging units 24, 26, and 32 constantly capture images while the power of the vehicle 10 is ON.

When the opening/closing door 14b of the vehicle 10 starts the opening motion, the acquisition unit 54 sequentially acquires the captured image data of the imaging unit 24, which is obtained by imaging the region including the inside and outside of the entrance 14. Then, the ability estimation unit 56 performs the image analysis on the acquired captured image data to extract the user M, assigns the personal identification code to each user M, and detects the getting-on motion for each user M (S100).

Then, the estimation unit 56a collates the detected motion of the user M with the motion feature item read from the item storage unit 68 (refer to Fig. 4), and estimates the physical ability value (S102). In other words, the estimation unit 56a calculates the total score value s by adding the score values of the motion feature items that match the motions of the user M.

Then, by using the relation table (refer to Fig. 5) read from the relation table storage unit 70, the risk degree determination unit 58 determines the fall risk degree D corresponding to the total score value s calculated by the estimation unit 56a (S104).

In addition, the determination unit 60 confirms whether or not the determined fall risk degree level D is designated as a monitoring target (S106), and in a case where the determined fall risk degree D is the monitoring target (Yes in S106), it is determined whether or not the user M satisfies the boarding posture corresponding to the determined fall risk degree D in S104 (S108). In a case where the boarding posture corresponding to the fall risk degree D is not satisfied (No in S108), the guide information control unit 62b outputs, for example, the guide information that urges the user M to take the boarding posture, or outputs the guide information for requiring the cooperation of the other users M such that the user M can take the boarding posture (S110), and the process returns to S108. Meanwhile, in S108, in a case where the user M satisfies the boarding posture corresponding to the fall risk degree D (Yes in S108), the fall risk degree D of all of the users M who board the vehicle by opening the opening/closing door 14b this time is determined, and it is confirmed whether or not the confirmation of the boarding posture has been completed (S112). In a case where all of the users M have not been confirmed (No in S112), for example, in a case where there is still a user M who desires to get on the vehicle, the process returns to S100, and the processes after S100 are repeatedly executed.

In step S112, in a case where all the users M have been confirmed (Yes in S112), that is, in a case where the opening/closing door 14b is closed, the fall risk degree D is determined for all of the users M who have got on the vehicle, and the boarding posture corresponding to the fall risk degree D is satisfied, the travel control unit 62a outputs a signal for permitting the departure of the vehicle 10 (S114). Then, the travel control unit 62a executes the departure control (S116), and completes this flow once. For example, the travel control unit 62a controls the brake system 44 to release the braking force that has been generated regardless of whether or not the brake pedal is depressed, such that the vehicle 10 can travel.

In S106, in a case where the determined fall risk degree level D is not designated as a monitoring target (No in S106), the process proceeds to S112, and the processes after S112 are executed.

In this manner, according to the in-vehicle fall prevention device of the embodiment, the physical ability value of the user M is estimated based on the getting-on motion when the user M gets on the vehicle, and thus, it becomes possible to more accurately estimate the physical ability value as compared with a case of estimation based on the age or gender. As a result, the estimation accuracy of the possibility of the falling of the user M in the vehicle is improved, the more accurate fall risk degree D is determined, and the occurrence of falling can be reduced. In addition, since it becomes possible to more accurately estimate the physical ability value, it becomes possible to reduce the possibility that the departure limit is excessively applied, and to perform appropriate traveling control.

As described above, the in-vehicle fall prevention unit 52 estimates the physical ability value of the user Ma at the time of getting on and determines the fall risk degree D based on the estimation. In addition, the in-vehicle fall prevention unit 52 can continue to confirm the boarding posture by the imaging unit 32, the pressure sensor 28, the grip sensor 30, and the like while the user Ma boards the vehicle 10. Therefore, the in-vehicle fall prevention unit 52 can detect the user M who satisfies the boarding posture corresponding to the fall risk degree D at the time of departure, but no longer satisfies the boarding posture. In a case of detecting the user M (Ma) who does not satisfy the boarding posture corresponding to the fall risk degree D during the boarding, the determination unit 60 may also consider the user M who does not satisfy the boarding posture during the boarding as a target of possibility determination of the vehicle departure at the time of the next departure control. Further, the guide information control unit 62b may output the guide information for urging the user to return to the boarding posture or the guide information for requiring the cooperation of other users M, by considering the user M who does not satisfy the boarding posture during the boarding as a target. As a result, the possibility of the falling of the user M in the vehicle can be further reduced, and the smooth operation of the vehicle 10 can be realized.

In the above-described first embodiment, in a case where the fall risk degree D is not a monitoring target, the departure of the vehicle 10 is permitted, but for example, the control state at the time of departure may be changed in accordance with the fall risk degree D which is not the monitoring target. For example, the control may be performed to reduce the acceleration gradient, or the guide information may be automatically output.

In the above-described first embodiment, an example has been described in which the relation change unit 58b changes the contents of the relation table storage unit 70 in a case where the falling occurs. In another embodiment, the relation change unit 58b may change the contents of the relation table storage unit 70 in accordance with the congestion state (boarding rate) of the vehicle 10. For example, in a case where the inside of the vehicle is congested (in a case where the boarding rate is high), the gap between the users is small. In such a case, even when the vehicle 10 is shaking, there is a low possibility that the user with a low physical ability value falls. Therefore, the relation change unit 58b may change the level of the fall risk degree D with respect to the total score value s (physical ability index p) so as to decrease. As a result, smoother start control can be performed. Conversely, in a case where the inside of the vehicle is vacant (in a case where the boarding rate is low), the upper body of the user is more likely to move as compared with a case where the vehicle is crowded. In other words, the possibility of falling increases. Therefore, the relation change unit 58b may change the level of the fall risk degree D with respect to the total score value s (physical ability index p) so as to increase. As a result, it is possible to perform the fall prevention control more suitable for the operation state of the vehicle 10.

In the first embodiment, a bus (route bus) is illustrated as an example of the vehicle 10, but the invention is applicable to any vehicle where a plurality of users can get on and off, for example, the in-vehicle fall prevention device of the embodiment is applicable even to a new transportation system, a tram and the like, and a similar effect can be obtained.

Second Embodiment

Next, as a second embodiment described for the purpose of understanding but not covered by the claims, similar to the first embodiment, a second embodiment in which the physical ability of the user is estimated and the fall risk degree is determined will be described. In the second embodiment, an ascending and descending motion when passing through the stepped part (for example, a stair or a step) is acquired before the user gets on the vehicle or the like, for example, while walking toward the vehicle or the like. Then, based on the acquired ascending and descending motion, the fall prevention information including the fall risk degree is created, an external system is provided in, for example, a vehicle to which the user desires to get in or a facility into which the user desires to enter, and the fall prevention measures (countermeasures) can be taken such that the fall risk of the user can be reduced in the vehicle or the facility. In other words, the second embodiment relates to a non-claimed fall prevention information providing device, the estimation processing and the determination processing performed in the vehicle 10 in the first embodiment are performed by the external system, and by providing the information to the vehicle 10 or the like, the processing load is reduced in the vehicle 10, and the fall prevention is more easily performed.

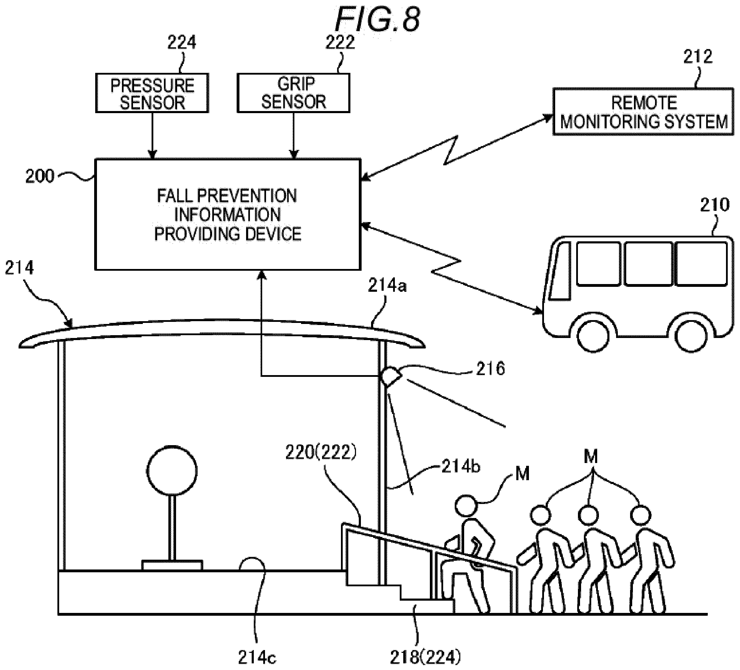

Fig. 8 is an exemplary and schematic view illustrating that the fall prevention information provided by a fall prevention information providing device 200 according to the second embodiment is provided to a remote monitoring system 212 (management system) or the like that remotely operates a vehicle 210 (for example, bus), the unmanned traveling or semi-unmanned traveling vehicles, and used. In a case of Fig. 8, the installation location of the fall prevention information providing device 200 may be in the vicinity of a stop 214 of the vehicle 210, or when various pieces of data detected at the stop 214 can be transferred to a remote location, the fall prevention information providing device 200 may be installed in a management center or the like at the remote location.

In the example of Fig. 8, an imaging unit 216 is installed at an upper position of an entrance door 214b, which enters a rain shield 214a of the stop 214, and the like. The imaging unit 216 is an example that images the ascending and descending motion of the user M when passing through a stepped part 218 (stairs, steps, and the like) provided at the entrance door 214b connected to a waiting space 214c where the user waits for getting on the vehicle 210, and sequentially provides the image to the fall prevention information providing device 200. As illustrated in Fig. 8, in a case where the stepped part 218 is an ascending stair, the imaging unit 216 images a stepping-on motion as the ascending and descending motion of the user M, and in a case where the stepped part 218 is a descending stair, the imaging unit 216 images a descending motion of the user M.

The imaging unit 216 that images the user M is, for example, a digital camera having a built-in imaging device such as a charge coupled device (CCD) or a CMOS image sensor (CIS). The imaging unit 216 sequentially acquires moving image data at a predetermined frame rate and outputs the acquired moving image data as captured image data. In addition, the imaging unit 216 may be an infrared camera that images an infrared emitted by a human body. The imaging region of the imaging unit 216 is, for example, a range in which the behavior of the user M who moves on the stepped part 218 can be imaged. The imaging region of the imaging unit 216 may include, for example, a region before entering the stepped part 218 (region 1 to 2 m ahead), image the posture in a state of waiting for entry into the 218, and be included in the determination information of the physical ability.

A handrail 220 that can be used when ascending and descending is installed at the stepped part 218 provided at the entrance door 214b. Similar to the handrail 20 of the first embodiment, in the handrail 220, a grip sensor 222 (for example, a capacitive sensor, a pressure sensor, or the like) that detects that the handrail 220 is being used (gripped) is disposed. In addition, in the stepped part 218, a pressure sensor 224 that specifies the standing position of the user M or the movement of the center of gravity of the body (for example, moving speed), and detects that the body has shaken greatly (was staggered greatly) and that the balance has been lost, is disposed at constant intervals (for example, in a matrix) on the surface of the stepped part 218.

In a case of the user M whose physical ability has deteriorated, similar to a case of boarding the vehicle 10 in the first embodiment, for example, when the user steps on the stepped part in a case of going up the stepped part 218 and lifts the upper body, there is a case of unconsciously taking a motion to support the upper body and stabilize the posture. For example, the user unconsciously grasps surrounding objects such as the handrail 220. In addition, in order to keep balance, there is a case where the stepping motion or the motion of lifting the upper body is unconsciously slowed down. Similarly, even after completing going up the stepped part 218, the user unconsciously grasps the surrounding objects, slows down the next step, and unconsciously widens the stride (distance between the left and right feet when standing up) to maintain the posture. The imaging unit 216 of the fall prevention information providing device 200 captures the ascending and descending motion when the user M passes through the stepped part 218, and analyzes the ascending and descending motion. As a result, the fall prevention information providing device 200 detects the presence or absence of an (unconscious) behavioral feature (use of the handrail 220 or a slow motion) for complementing the deterioration of the own physical ability of the user M, and estimates the scale of the physical ability related to falling to determine the fall risk degree. Then, the fall prevention information providing device 200 creates fall prevention information including the fall risk degree. In other words, the fall prevention information providing device 200 creates in advance the fall prevention information which is obtained by objectively evaluating and estimating the physical ability of the user M, regardless of attributes such as age and gender. Then, by providing the fall prevention information to the vehicle 210, the remote monitoring system 212, and the like, the fall prevention information providing device 200 can easily execute the vehicle control or the advance preparation that makes the vehicle more unlikely to fall.

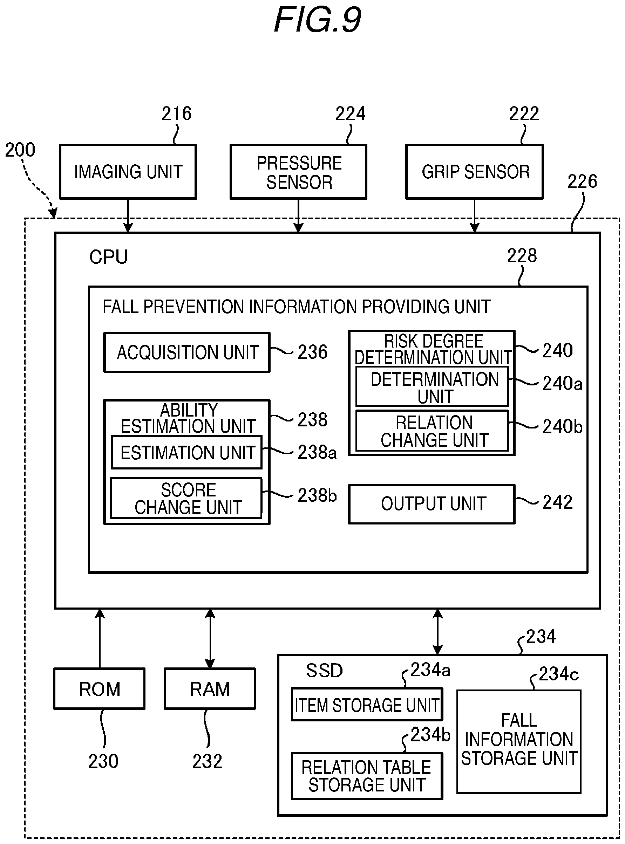

The fall prevention information providing device 200 has the same computer resources as a general information processing device such as a personal computer (PC). Fig. 9 is an exemplary and schematic block diagram illustrating a configuration of a fall prevention information providing unit 228 realized by the CPU 226 included in the fall prevention information providing device 200. The fall prevention information providing device 200 includes a storage unit, such as a central processing unit (CPU) 226, a read only memory (ROM) 230, a random access memory (RAM) 232, a hard disk drive (HDD), and a solid state drive (SSD) 234, a communication interface, an input and output interface (which are not illustrated), and the like. The CPU 226 integrally controls the motions of the fall prevention information providing device 200. The ROM 230 is a nonvolatile storage device that stores various programs and data. The RAM 232 is a storage device for temporarily storing various programs and rewriting various pieces of data. The CPU 226 executes the program stored in the ROM 230, the storage unit and the like, using the RAM 232 as a work area (work region). In addition, the SSD 234 is a rewritable non-volatile storage unit, and can store data even in a case where the power source of the fall prevention information providing device 200 is turned off. For example, a motion feature item to be referred to in a case of estimating the physical ability value, a relation table to be referred to in a case of determining the fall risk degree, and the like are stored.

The CPU 226 realizes the fall prevention information providing unit 228 by executing a fall prevention information providing program read from the ROM 230. The fall prevention information providing unit 228 includes various modules for realizing the function. The fall prevention information providing unit 228 includes, for example, modules such as an acquisition unit 236, an ability estimation unit 238, a risk degree determination unit 240, and an output unit 242. The ability estimation unit 238 includes detailed modules such as an estimation unit 238a and a score change unit 238b. The risk degree determination unit 240 includes detailed modules such as a determination unit 240a and a relation change unit 240b.

The acquisition unit 236 sequentially acquires the captured image data (captured image) obtained by imaging by the imaging unit 216. The imaging unit 216 may be provided in the acquisition unit 236 by attaching an identification code for identifying an imaging location (imaging region), an imaging time, and the like to the captured image data, and may attach the identification code to each captured image data acquired by the acquisition unit 236.

The ability estimation unit 238 extracts the user Ma from the captured image by performing image analysis (for example, image analysis using the known face recognition or the like) with respect to the captured image data acquired by the acquisition unit 236, and assigns the personal identification code to each user M. Then, the ability estimation unit 238 performs a detailed analysis of the ascending and descending motion of the user M who has been individually identified, performs evaluation with respect to each individual motion, and estimates the physical ability value of the user M. Specifically, the estimation unit 238a of the ability estimation unit 238 refers to an item storage unit 234a that stores the scored motion feature items for each motion that the user M can take while passing through the stepped part 218. Then, the estimation unit 238a sequentially adds scores corresponding to the motion feature items that have been confirmed among the motions of the user M, and sets (estimates) the total value of the scores as the physical ability value of the user M. The item storage unit 234a has a storage region ensured in, for example, the SSD 234 which is a rewritable non-volatile storage unit.

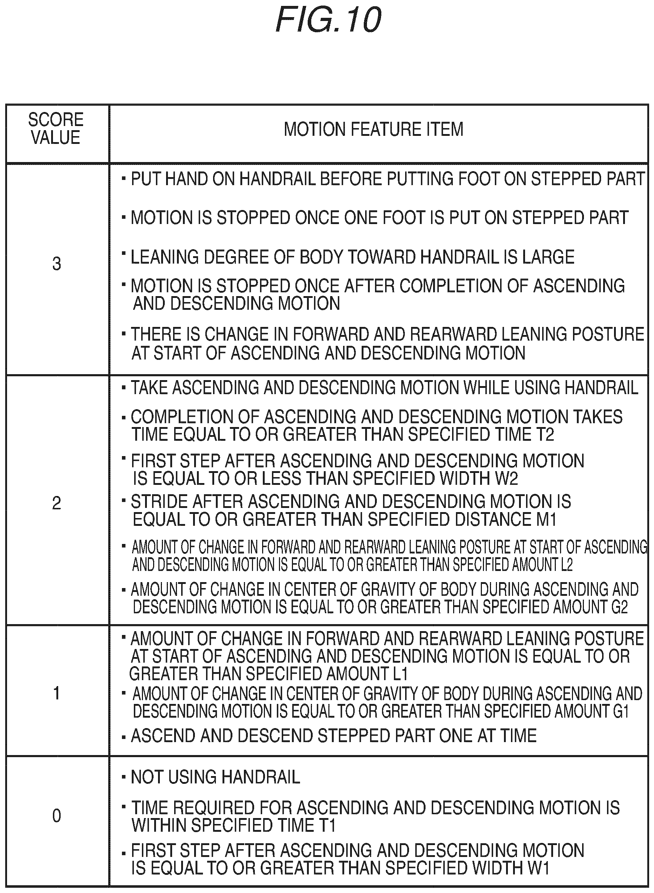

Fig. 10 illustrates an example of the motion feature items stored in the item storage unit 234a. As illustrated in Fig. 10, a plurality of motion feature items and scores to be added in a case where the motion is confirmed are stored in association with each other. The score illustrated in Fig. 10 is defined such that, for example, the higher the physical ability, the lower the numerical value.

In a case where the motion of the user M who goes up the stepped part 218 and enters the waiting space 214c is acquired in the captured image data of the imaging unit 216 acquired by the acquisition unit 236, the estimation unit 238a collates the motion and the motion feature item stored in the item storage unit 234a with each other. For example, in the estimation unit 238a, when the user M passes through the stepped part 218 and enters the waiting space 214c, in a case where "not using a handrail", "time required for the ascending and descending motion is within the specified time T1", "first step after the ascending and descending motion is equal to or greater than the specified width W1", and the like are confirmed, each motion feature item is one of the physical abilities necessary for executing a smooth ascending and descending motion. In this case, the estimation unit 238a registers a score value "0" in a work region of the RAM 232 for each confirmed motion feature item as a score indicating the physical ability of the user M. Similarly, when the user M passes through the stepped part 218 and enters the waiting space 214c, in a case where "the amount of change in the forward and rearward leaning posture at the start of the ascending and descending motion is equal to or greater than the specified value L1", "the amount of change in the center of gravity of the body during the ascending and descending motion is equal to or greater than the specified value G1", "ascend and descend the stepped part one at a time", and the like are confirmed, each motion feature item indicates a motion in which a slight slowness is recognized. Therefore, the user M can be considered as having a "slight deterioration of physical ability" as compared with the user M who can realize the motion feature item of score = 0. In this case, the estimation unit 238a registers a score value "1" in a work region of the RAM 232 for each confirmed motion feature item as a score indicating the physical ability of the user M.

Similarly, when the user M goes up the stepped part 218 and enters the waiting space 214c, in a case where "take the ascending and descending motion while using a handrail", "completion of the ascending and descending motion takes time equal to or greater than the specified time T2", "first step after the ascending and descending motion is equal to or less than the specified width W2", "stride after the ascending and descending motion is equal to or greater than the specified distance M1", "the amount of change in the forward and rearward leaning posture at the start of the ascending and descending motion is equal to or greater than the specified value L2", "the amount of change in the center of gravity of the body during the ascending and descending motion is equal to or greater than the specified value G2", and the like are confirmed, each motion feature item indicates a motion in which a remarkable slowness is recognized. Therefore, the user M can be considered as having a "moderate deterioration of physical ability" as compared with the user M who can realize the motion feature item of score = 0. In this case, the estimation unit 238a registers a score value "2" in a work region of the RAM 232 for each confirmed motion feature item as a score indicating the physical ability of the user M.

Furthermore, when the user M goes up the stepped part 218 and enters the waiting space 214c, "put the hand on a handrail before putting the foot on the stepped part", "the motion is stopped once one foot is put on the stepped part", "the leaning degree of the body toward the handrail is large", "the motion is stopped once after the completion of the ascending and descending motion", "there is a change in the rearward leaning posture at the start of the ascending and descending motion" and the like are confirmed, each motion feature item indicates the motion for carefully balancing the body. Therefore, the user M can be considered as having a "large deterioration of physical ability" as compared with the user M who can realize the motion feature item of score = 0. In this case, the estimation unit 238a registers a score value "3" in a work region of the RAM 232 for each confirmed motion feature item as a score indicating the physical ability of the user M.

The estimation unit 238a calculates the total of the scores of the motion feature items that are confirmed in the middle of the ascending and descending motion of the user M imaged by the imaging unit 216, and sets the total score value s as the physical ability value of the user M. In this case, the larger the total score value s, the lower the physical ability.

The motion feature items illustrated in Fig. 10 are merely examples, and the number of items can be increased or decreased as appropriate. Further, the score for each motion feature item can be determined in advance by a test or the like, but even in a case where the physical ability value is estimated based on the total score value s, the fall risk degree is confirmed, and the departure control of the vehicle 210 and the like is performed, there is a case where the falling occurs. Therefore, the score change unit 238b can change the score value for each motion feature item based on the actually occurred fall. The details of the processing by the score change unit 238b will be described later.

When the ability estimation unit 238 can estimate the physical ability value of the user M, the risk degree determination unit 240 determines the fall risk degree of the user M based on the physical ability value. The determination unit 240a of the risk degree determination unit 240 reads the relation table in which the relation between the total score value and the fall risk degree indicating the possibility of falling is determined, from a relation table storage unit 234b, and determines the risk degree corresponding to the total score of the user M. The relation table storage unit 234b has a storage region ensured in, for example, the SSD 234 which is a rewritable non-volatile storage unit.

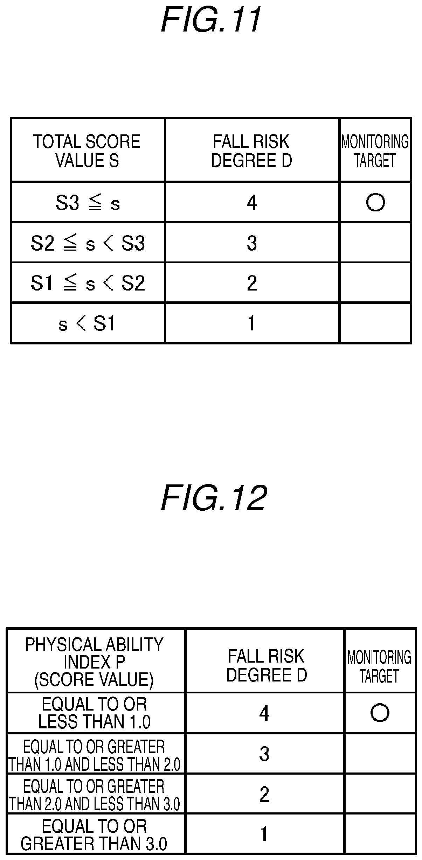

Fig. 11 illustrates an example of the relation table in which the relation between the total score value s indicating the physical ability value and the fall risk degree D is determined, which are stored in the relation table storage unit 234b. As illustrated in Fig. 11, the fall risk degree D corresponds to the total score value s having a certain width. In addition, the fall risk degree D illustrated in Fig. 11 is set such that, for example, the larger the total score value s, the higher the fall risk degree D, that is, the higher the fall risk.

In a case where the total score value s calculated by the estimation unit 238a is, for example, less than the specified value S1, the determination unit 240a determines the fall risk degree D to be "1". In a case where the fall risk degree D = 1, for example, the possibility of falling is low, and it is determined that no particular fall prevention measures are required. In addition, in a case where the total score value s is equal to or greater than the specified value S1 and less than the specified value S2 that is greater than the specified value S1, the determination unit 240a determines the fall risk degree D to be "2". In a case where the fall risk degree D = 2, the user M determines that the fall prevention measures (countermeasures) are not necessary but requires attention because the possibility of falling is slight, for example.

In a case where the total score value s is equal to or greater than the specified value S2 and less than the specified value S3 that is greater than the specified value S2, the determination unit 240a determines the fall risk degree D to be "3". In a case where the fall risk degree D = 3, the user M determines that the fall prevention measures (countermeasures) are necessary because there is a possibility of falling, for example. In addition, in a case where the total score value s is equal to or greater than the specified value S3, the determination unit 240a determines the fall risk degree D to be "4". In a case where the fall risk degree D = 4, the user M determines that the fall prevention measures (countermeasures) are preferentially necessary because the possibility of falling is high, for example. In this manner, since the risk degree determination unit 240 determines the physical ability value of the user M when passing through the stepped part 218 based on the ascending and descending motion, it is possible to objectively and more accurately determine the fall risk degree D. For example, the accuracy of the fall risk degree is improved as compared with a case where "elderly person = high fall risk degree". As a result, information users of the vehicle 210 and the remote monitoring system 212 that have received the fall prevention information do not need to take excessive countermeasures such as controls and warnings for the fall prevention, and it is possible to provide the user M with smoother natural services. In addition, the determination unit 240a can determine whether or not each fall risk degree D is a monitoring target. Fig. 11 is an example in which only the fall risk degree D = 4 is the monitoring target.

In addition, the correspondence between the total score value s and the fall risk degree D illustrated in Fig. 11 is an example, and the correspondence range of the total score value s corresponding to the fall risk degree D may be made more detail. In other words, the fall risk degree D may be classified in more detail. The correspondence between the total score value s and the fall risk degree D can be determined in advance by a test or the like, but even in a case where the departure control of the vehicle 210 and the like is performed based on the fall risk degree D, there is a case where the falling occurs. Therefore, the relation change unit 240b can change the correspondence range of the total score value s with respect to the fall risk degree D based on the fall that has actually occurred. The details of the processing by the relation change unit 240b will be described later.

The output unit 242 creates the fall prevention information including the fall risk degree D determined by the risk degree determination unit 240, and outputs the information to an external system (for example, the vehicle 210 or the remote monitoring system 212). The fall prevention information may include information for specifying the user M, such as the physical feature of the user M (for example, face recognition information, body type information, the presence or absence of luggage, and the presence or absence of attendant), in addition to the information in which the personal identification code for each user M imaged by the imaging unit 216 and the fall risk degree D are associated with each other.

The output unit 242 provides, for example, the fall prevention information to the vehicle 210, and accordingly, in the vehicle 210, it is possible to take in advance the fall prevention measures (countermeasures) for the user M who is expected to board the vehicle. For example, before arriving at the stop 214 where the user M desires to board, for the user M with the fall risk degree D = 4, it is possible to perform a preliminary in-vehicle broadcast so as to leave a priority seat or the like, or to ask for cooperation from the user M who has already boarded. Further, for example, as described in the first embodiment, even in a case of performing control at the time of starting the vehicle 210, before arriving at the stop 214, with respect to the user M who has already boarded, it becomes possible to make an announcement that the departure is carefully performed at the next stop 214, and it is possible to more easily obtain cooperation of the user M who has already boarded. As a result, for example, the boarding (acceptance) of the user M with the fall risk degree D = 4 can be smoothly performed, and to reduce the possibility of the falling of the user M with the fall risk degree D = 4. In addition, since the fall prevention measures (countermeasures) can be completed before arriving at the stop 214, the acceptance of the user M at the stop 214 can be performed more quickly, and the departure (operation) of the vehicle 210 can be more smoothly performed.

Further, since the driver of the vehicle 210 can grasp in advance the user M with the fall risk degree D = 4 and can take fall prevention measures (countermeasures), in a case where the user M with the fall risk degree D = 4 boards the vehicle 210, it becomes easy to pay attention, and it becomes easy to confirm whether or not the fall prevention has been completed. In this manner, by receiving the fall prevention information from the fall prevention information providing device 200 in advance, without newly adding an imaging device or a sensor similar to the vehicle 10 of the first embodiment, it is possible to take the fall prevention countermeasures in the existing vehicle. The vehicle 10 including the in-vehicle fall prevention unit 52 of the first embodiment can also receive the fall prevention information from the fall prevention information providing device 200. In this case, it is possible to omit the imaging unit 24 provided at the entrance 16 and to omit the ability estimation unit 56 and the risk degree determination unit 58 in the in-vehicle fall prevention unit 52, and accordingly, it is possible to contribute to simplifying the system, reducing the processing load, and reducing the costs. Even in such a case, the behavior (motion) of the user M in the vehicle is continuously monitored by the imaging unit 32 in the vehicle compartment, the pressure sensor 28 provided on the seat 18 or the floor, and the grip sensor 30 provided in the handrail 20 or the like, and accordingly, it is possible to more reliably perform the fall prevention.

Incidentally, in the vehicle 210 which has been provided with the fall prevention information from the fall prevention information providing device 200, even in a case where the fall prevention measures based on the fall risk degree D are taken, there is a case where the falling occurs. For example, even after the user M gets on the vehicle 210, by continuously imaging the user M in the vehicle 210 and performing the image analysis, it is possible to track the specific user M based on the personal identification code including the fall prevention information provided from the fall prevention information providing device 200. In other words, it is possible to detect the motion of the user M in the vehicle, whether or not the falling has occurred, and the like, and it is possible to feed back the fact of the falling to the fall prevention information providing device 200. Further, since the driver and the occupant of the vehicle 210 can grasp the fall risk degree D for each user M based on the fall prevention information provided from the fall prevention information providing device 200, in a case where the falling has occurred, it is possible to feed back the information on the user M who has fallen to the fall prevention information providing device 200.

In a case where the falling occurs despite the fact that the fall prevention measures were taken in the vehicle 210 based on the provided fall prevention information, the fall prevention information providing device 200 estimates that the estimation of the physical ability value of the user M by the ability estimation unit 238 is insufficient. Therefore, the score change unit 238b can change the score for each motion feature item stored in the item storage unit 234a based on the fall information fed back from the vehicle 210. For example, the motion feature items adopted when estimating the physical ability value of the faller are "ascend and descend the stepped part one at a time" with score value = 1, "the amount of change in the center of gravity of the body during the ascending and descending motion is equal to or greater than the specified value G1" with score value = 1, and "take the ascending and descending motion while using a handrail" with score value = 2, and the physical ability value is estimated by the total score value s = 4. In this case, there is a possibility that the physical ability of the faller has been overestimated. Therefore, the score change unit 238b sets the score values of "ascend and descend the stepped part one step at a time" and "the amount of change in the center of gravity of the body during the ascending and descending motion is equal to or greater than the specified value G1" among the motion feature items, to be "2". In addition, the score value of "take the ascending and descending motion while using a handrail" is changed to "3". In this case, along with the change of the score value, the score values of other motion feature items may be changed in conjunction with each other. With the change of the score value of "take the ascending and descending motion while using a handrail" to "3", the score value of the motion feature item of "put the hand on a handrail before putting the foot on the stepped part" with the original score value = 3 may be set to satisfy score value = 4 which is one rank higher (new setting of score value = 4). As described above, the estimation accuracy of the physical ability value can be improved by executing the learning processing of changing the score value of the motion feature item based on the fall that has actually occurred.

In the fall prevention information providing device 200, a case where the falling occurs despite the fact that the fall prevention measures were taken in the vehicle 210 based on the provided fall prevention information, the risk degree determination unit 240 estimates that the determination of the fall risk degree D of the user M is insufficient. Therefore, the relation change unit 240b can change the correspondence between the total score value s and the fall risk degree D which are stored in the relation table storage unit 234b, based on the fall information fed back from the vehicle 210. For example, before the change, in a case where the total score value s is equal to or greater than the specified value S1 and less than the specified value S2, it is set that the fall risk degree D is determined to be "2". Then, the monitoring subject has fallen despite the fall prevention measures were taken in the vehicle 210, for example, based on the fall risk degree D = 2. Therefore, the relation change unit 58b executes the learning processing of changing the fall risk degree D to "3" in a case where the total score value s is equal to or greater than the specified value S1 and less than the specified value S2. As a result, the contents of the fall prevention measures for the user M are upgraded. For example, the contents of the fall prevention measures (countermeasures) to make it possible to reliably take a seat or grip the handrail in the vehicle 210 are changed. As a result, the risk of occurrence of the falling of the user M can be reduced.

In addition, the score value or the correspondence may be changed by the score change unit 238b or the relation change unit 240b every time the occurrence of falling of the user M is fed back, but the possibility of occurrence of bias or the like in the change contents increases. Therefore, the score change unit 238b and the relation change unit 240b may perform the change (learning) at a stage where the statistical tendency is clear in a case where a predetermined number of samples are prepared or in a case where a predetermined period has elapsed, or the change may be automatically executed every predetermined period. Further, the operator of the fall prevention information providing device 200 may be able to manually execute the change processing.

In the description above, the estimation unit 238a of the ability estimation unit 238 calculates the total score value s by sequentially collating the ascending and descending motion of the user M obtained by analyzing the captured image data acquired by the acquisition unit 236 and the plurality of motion feature items stored in the item storage unit 234a with each other, and estimates the physical ability value. In another embodiment, similar to the first embodiment, the estimation unit 238a may use a model formula (multiple regression equation) created in advance based on a motion indicator (explanatory variable) indicating a motion having a high degree of influence on the physical ability value among motions that the user M can take when ascending and descending the stepped part 218, and estimate the physical ability value. The model formula is, for example, as follows.

physical ability index p = α1 x motion indicator A + α2 x motion indicator B + α3 x motion indicator C + β

Here, the physical ability index p is an objective variable in the multiple regression equation, $\alpha 1$, $\alpha 2$, and $\alpha 3$ are partial regression coefficients, the motion indicators A, B, and C are explanatory variables indicating a motion having a high degree of influence on the physical ability value, and $\beta$ is a constant term. As the contents of the motion indicators A, B, and C, the contents that can estimate a highly accurate physical ability value in a test performed in advance are appropriately selected. The motion indicator A is, for example, a stride when the user ascends and descends the stepped part 218. As the physical ability decreases, the motion of trying to widen the stride and obtain a sense of stability is more likely to be shown. The motion indicator B is, for example, a forward (rearward) leaning amount of the upper body when climbing up (climbing down) the stepped part 218. As the physical ability decreases, a motion of trying to take the forward leaning posture (rearward leaning posture) and to easily keep balance is likely to be shown. The forward and rearward leaning amount can be shown by, for example, a distance between the face and the knee, a rate of change in the distance, and the like. The motion indicator C is, for example, a time period until the next step is taken after ascending and descending the stepped part 218. As the physical ability decreases, a motion of taking a break after one motion (for example, the motion of ascending and descending the stepped part 218) is likely to be shown. In addition, the number of motion indicators (explanatory variables) in the multiple regression equation can be determined by verifying a plurality of samples in a test stage performed in advance. The partial regression coefficient is determined depending on the number of samples (database) in the test stage.

Fig. 12 illustrates the correspondence between the physical ability index p (score value) calculated by the above-described model formula and the fall risk degree D. When the physical ability index p (score value) is, for example, equal to or greater than 3.0, "1" is associated with the fall risk degree D. In a case where the fall risk degree D = 1, for example, the possibility of falling is low, and it is determined that no particular fall prevention measures (countermeasures) are required. In addition, in a case where the physical ability index p (score value) is, for example, equal to or greater than 2.0 and less than 3.0, "2" is associated with the fall risk degree D. In a case where the fall risk degree D = 2, the user M determines that the fall prevention measures (countermeasures) are not necessary but requires attention because the possibility of falling is slight, for example.

In addition, in a case where the physical ability index p (score value) is, for example, equal to or greater than 1.0 and less than 2.0, "3" is associated with the fall risk degree D. For example, in a case where the fall risk degree D = 3, the user M determines that the fall prevention measures (countermeasures) are necessary because there is a possibility of falling, for example. In addition, in a case where the physical ability index p (score value) is, for example, equal to or less than 1.0, "4" is associated with the fall risk degree D. In a case where the fall risk degree D = 4, the user M determines that the fall prevention measures (countermeasures) are preferentially necessary because the possibility of falling is high, for example. In addition, in a case of the example illustrated in Fig. 12, the determination unit 240a can determine whether or not each fall risk degree D is a monitoring target. Fig. 12 is an example in which only the fall risk degree D = 4 is the monitoring target.

As described above, in a case where the model formula is used, the fall risk degree D is determined by calculating the physical ability index p (score value) only for the specific motion (several types of explanatory variables) of the user M, it is possible to reduce the processing load of the CPU 226, and to more quickly determine the fall risk degree D. Meanwhile, in a case of estimating the physical ability value using the item storage unit 234a, collation with each motion feature item becomes necessary, the processing load of the CPU 226 increases, but the boarding motion of the user M can be analyzed in more detail. As a result, the estimation accuracy of the physical ability value can be improved, and the reliability of the fall risk degree D can increase.

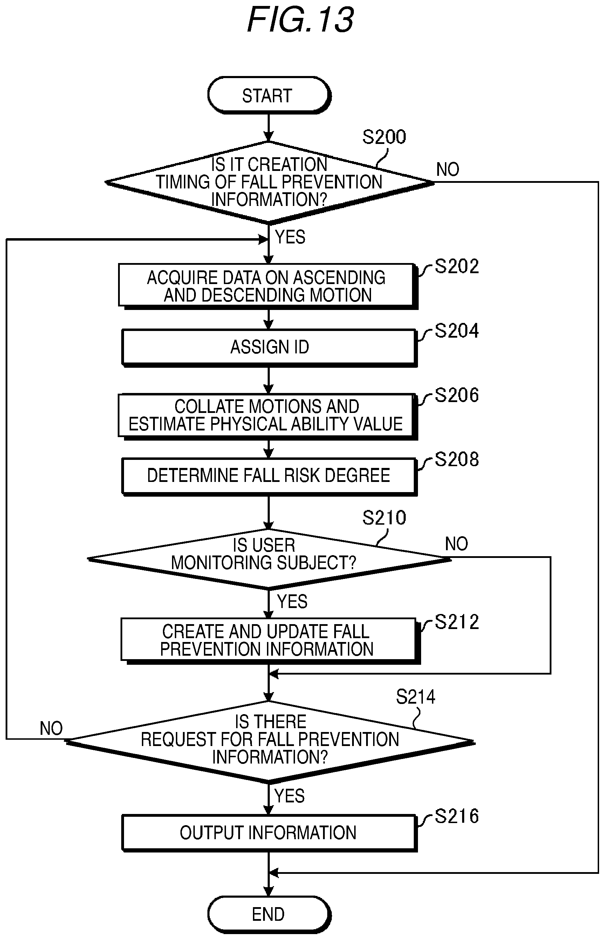

An example of the flow of the fall prevention information providing processing by the fall prevention information providing device (fall prevention information providing unit 228) configured as described above is described using the flowchart of Fig. 13.

The acquisition unit 236 of the fall prevention information providing unit 228 determines whether or not it is a creation period of the fall prevention information (S200). The creation period of the fall prevention information may be, for example, a period from 10 minutes before the vehicle 210 arrives at the stop 214 until the departure based on the operation schedule of the vehicle 210, and the creation may be started in a case where the user M approaches the stepped part 218 regardless of the operation schedule. In addition, in a case where it is not the creation period (No in S200), this flow is temporarily completed.

In a case where it is determined that it is the creation period of the fall prevention information (Yes in S200), the acquisition unit 236 acquires data on the ascending and descending motion of the user M who ascends and descends the stepped part 218 (S202). The acquisition unit 236 acquires, for example, the captured image data imaged by the imaging unit 216, the data indicating the presence or absence of grip detected by the grip sensor 222, the data indicating the movement of the foot of the user M on the stepped part 218 detected by the pressure sensor 224, and the like. Further, the acquisition unit 236 assigns an identification code (ID) to each piece of the acquired data (S204) such that each of the users M can be identified. The imaging unit 216 may be imaged only in a case of the creation period of the fall prevention information, or may be constantly imaged for monitoring.

The estimation unit 238a collates the acquired ascending and descending motion of the user M with the motion feature item read from the item storage unit 234a (refer to Fig. 10), and estimates the physical ability value (S206). In other words, the estimation unit 238a calculates the total score value s by adding the score values of the motion feature items that match the motions of the user M.

Then, by using the relation table (refer to Fig. 11) read from the relation table storage unit 234b, the determination unit 240a determines the fall risk degree D corresponding to the total score value s calculated by the estimation unit 238a (S208). Incidentally, in general, it is considered that, regarding the user M who walks to the stop 214, there are many users M who have no risk of falling. In other words, there are many users M who do not need to be included in the fall prevention information. Therefore, the output unit 242 determines whether or not each of the users M is a monitoring target based on the determined fall risk degree D (S210), and for example, in the vehicle 210, only in a case where there is a monitoring subject who requires the fall prevention measures (countermeasures) (Yes in S210), the fall prevention information is created or the existing fall prevention information is updated (S212). For example, in Fig. 11, while the fall prevention information is described while the fall risk degree D = 2 or greater is considered as the monitoring subject, in a case where the user is not the monitoring subject (No in S210), that is, the user M having a low risk of falling, the user is excluded from the fall prevention information. As a result, the fall prevention information provided in the vehicle 210 and the like is simplified, and sufficient attention can be easily given to the monitoring subject (user M). The setting of the fall risk degree D as the monitoring subject can be changed as appropriate, and may be changed depending on the destination of the fall prevention information, or the time zone to be provided (for example, during congestion and non-congestion), the weather (fine weather, rainy weather, snowfall, and the like) and the like may be changed.

In a case where there is a transmission request for the fall prevention information from the vehicle 210, the remote monitoring system 212, or the like (Yes in S214), the output unit 242 outputs (transmits) the created latest fall prevention information to the request source (S216). The request for the fall prevention information may be manually made individually from the vehicle 210 or the remote monitoring system 212, or may be performed automatically at a predetermined timing, for example, a predetermined period before the arrival at the stop 214 (for example, at the time of departure of the previous stop).

In S214, in a case where the request for the fall prevention information has not been received yet (No in S214), the process proceeds to S202, and the data on the user M who ascends and descends the stepped part 218 is continuously collected, and the subsequent processing is repeatedly executed.

At a predetermined timing, for example, a timing at which the vehicle departs from the stop immediately before the stop 214 for which the fall prevention measures is to be performed, the vehicle 210 requests for the fall prevention information on the next stop 214 with respect to the fall prevention information providing device 200. This request can be made using a request switch or the like disposed in the driving seat of the vehicle 210. Then, in a case where the driver of the vehicle 210 acquires the fall prevention information, the driver of the vehicle 210 can perform preparations for receiving a monitoring subject for whom the fall prevention measures are required based on the fall prevention information. In addition, the fall prevention information acquired from the fall prevention information providing device 200 is displayed on a display device installed in a driving seat or the like. The fall prevention information may include, for example, the face image or the fall risk degree D of the monitoring subject, or the contents of the fall prevention measures (countermeasures) based on the fall risk degree D, for example, information indicating the preparation for a vacant seats and precautions at the time of departure.

As described above, in a case where the monitoring subject exists, the driver or the occupant of the vehicle 210 can ensure in advance, for example, a vacant seat for the monitoring subject, a space where a handrail or a strap can be grasped, as preparation for the boarding of the monitoring subject (user M). As a result, the monitoring subject (for example, the user M with the fall risk degree D = 4 and the like) can smoothly perform boarding (acceptance). Further, as described in the first embodiment, the vehicle 210 can execute the departure control and the like in consideration of the monitoring subject (fall risk degree D = 4 or the like).

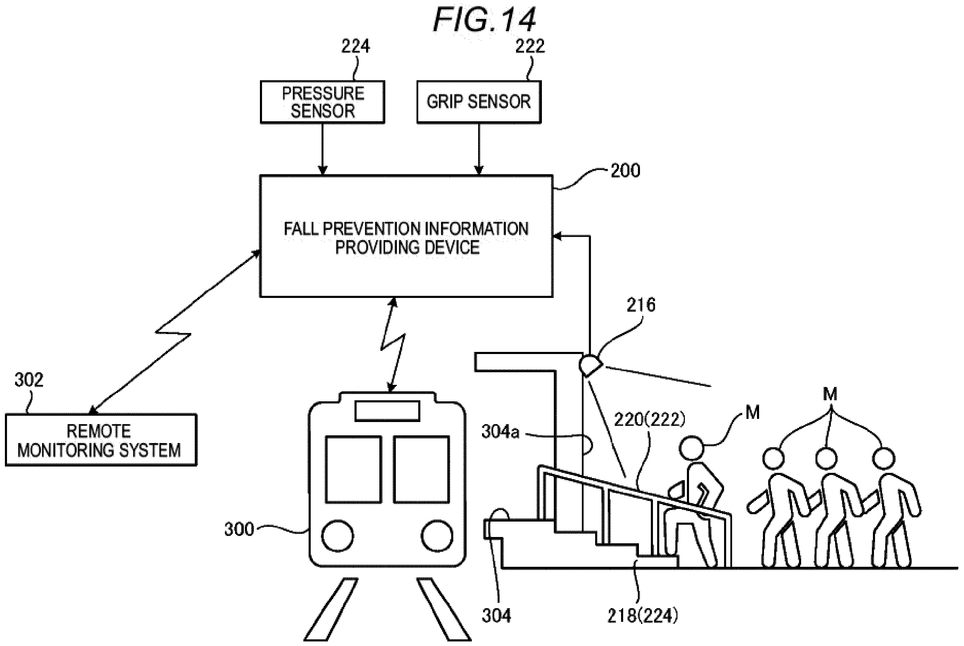

Fig. 14 is an exemplary and schematic view illustrating that the fall prevention information provided by the fall prevention information providing device 200 according to the second embodiment is provided to a remote monitoring system 302 or the like that remotely operates a vehicle 300 (for example, electric train), the unmanned traveling or semi-unmanned traveling electric train, and used. In a case of Fig. 14, the installation location of the fall prevention information providing device 200 may be in the vicinity of a station building or a platform 304, or when various pieces of data detected at the station building or the platform 304 can be transferred to a remote location, the fall prevention information providing device 200 may be installed in a management center or the like at the remote location. Fig. 14 is the same as the example illustrated in Fig. 8 except that the ascending and descending motion related to the user M who enters the platform 304 for boarding the vehicle 300 (for example, electric train) is collected, configurations which are substantially the same as each other will be given the same reference numerals, and the detailed description thereof will be omitted.

In the example of Fig. 14, the imaging unit 216 is installed at an upper position or the like of an entrance door 304a for entering the platform 304 into which the vehicle 300 enters. The imaging unit 216 is an example that images the ascending and descending motion of the user M when passing through the stepped part 218 (stairs, steps, and the like) provided at a passage connected to the platform 304 where the user waits for getting on the vehicle 300, and sequentially provides the image to the fall prevention information providing device 200. Even in a case of Fig. 14, in a case where the stepped part 218 is an ascending stair, the imaging unit 216 images a stepping-on motion as the ascending and descending motion of the user M, and in a case where the stepped part 218 is a descending stair, the imaging unit 216 images a descending motion of the user M.

A handrail 220 that can be used when ascending and descending is installed at the stepped part 218 provided at the entrance door 304a. In the handrail 220, a grip sensor 222 (for example, a capacitive sensor, a pressure sensor, or the like) that detects that the handrail 220 is being used (gripped) is disposed. In addition, in the stepped part 218, a pressure sensor 224 that specifies the standing position of the user M or the movement of the center of gravity of the body (for example, moving speed), and detects that the body has shaken greatly (was staggered greatly) and that the balance has been lost, is disposed at constant intervals (for example, in a matrix) on the surface of the stepped part 218. Further, the imaging unit 216, the grip sensor 222 installed on the handrail 220, the pressure sensor 224 known from the stepped part 218, and the like may be installed in the vicinity of a remodeled station or a passage connected to the station building.

Then, the imaging unit 216 images the ascending and descending motion of the user M who ascends and descends (steps up) the stepped part 218 in order to get on the vehicle 300, and sequentially provides the image to the fall prevention information providing device 200. In addition, various pieces of data detected by the grip sensor 222 and the pressure sensor 224 are also sequentially provided to the fall prevention information providing device 200. The fall prevention information providing device 200 executes the same processing as the above-described processing, creates the fall prevention information on the user M heading to the platform 304, and provides the information to the vehicle 300 which is a boarding target, the remote monitoring system 302, and the like. As a result, even in the vehicle 300 such as the electric train, it becomes possible to prepare for the fall prevention measures (countermeasures) in advance, and it is possible to minimize a schedule delay and the like. In particular, in a case of a single track where the number of users is small in a local city or the like, it is easy to take the fall prevention measures sufficiently and smoothly in advance, and thus, it is also possible to contribute to reducing the load on the occupants of the vehicle 300 and improving the service.

In the second embodiment, an example has been described in which the fall prevention information created by the fall prevention information providing device 200 is provided to the vehicle 210, the vehicle 300, the remote monitoring system 212, and the remote monitoring system 302, but the information may be provided to a facility. For example, it is possible to prepare a chair for the monitoring subject in the facility, or to perform guidance on guideways or disposition of guidance assistants in advance such that the monitoring subject can safely move without the falling, and it is possible to contribute to improving the service.

Further, the fall prevention information created by the fall prevention information providing device 200 may be output being associated with information such as the place, time, weather, and the like where the user M is confirmed. From such information, it is possible to obtain distribution information such as a region or a time zone frequently used by a user having a high possibility of falling. For example, in an external system such as a management center that has acquired the fall prevention information, based on each piece of the acquired information, the information can be used as a material for examining changes in the specifications of the vehicles 210 and 300 and the specifications of facilities. In addition, with respect to the vehicles 210 and 300, it is possible to use the information as the examination material such as an operation schedule that can reduce congestion and an operation route that can reduce the shaking during the operation. As a result, it is possible to realize a smoother operation with a reduced fall risk.

Although the embodiment and the modification example disclosed here have been described, the embodiment and the modification example are presented as examples and are not intended to limit the scope of the invention. The above-described novel embodiment can be implemented in other various forms. The scope of protection is defined by the claims.

**Claims**

1. An in-vehicle fall prevention device (52) comprising:

   an acquisition unit (54, 236) that acquires a captured image obtained by imaging boarding motions of each of a plurality of users (M, Ma) when the users step up a stepped part (218) and board a vehicle (10, 210, 300) in which the users are capable of getting on and off;
   an ability estimation unit (56, 238) that estimates a physical ability value for each of the users based on the captured boarding motion;
   a risk degree determination unit (58, 240) that determines a fall risk degree (D) of the user based on the physical ability value;
   a determination unit (60) that determines whether or not a boarding posture corresponding to the fall risk degree (D) is satisfied, for each of the users who boarded the vehicle; and
   a control unit (62) that executes departure control of the vehicle based on a determination result of the determination unit (60).

2. The in-vehicle fall prevention device (52) according to claim 1, wherein
   the ability estimation unit (56, 238) refers to an item storage unit (68, 234a) that stores motion feature items with scores for each motion that the user is capable of taking during boarding, and estimates the physical ability value from a total value (s) of the scores of the motion feature items corresponding to the motion taken by the user during boarding.

3. The in-vehicle fall prevention device (52) according to claim 1, wherein
the ability estimation unit (56, 238) estimates the physical ability value by using a model formula determined based on a motion indicator indicating a motion having a high degree of influence on the physical ability value among motions that the user is capable of taking during boarding.

4. The in-vehicle fall prevention device (52) according to claim 2, further comprising:

a first fall storage unit (72a) that stores first fall information in which the fall risk degree (D) of a faller and the motion feature item when estimating the physical ability value are associated with each other, in a case where the departure control of the vehicle is executed based on the determination result of the determination unit (60) and falling occurs, wherein
the ability estimation unit (56, 238) changes the score for each of the motion feature items stored in the item storage unit based on the first fall information.

5. The in-vehicle fall prevention device according to claim 2, further comprising:

a second fall storage unit (72b) that stores second fall information in which the fall risk degree (D) of a faller and the total value of the scores when estimating the physical ability value are associated with each other, in a case where the departure control of the vehicle is executed based on the determination result of the determination unit (60) and falling occurs, wherein
the risk degree determination unit (58, 240) changes and stores a relation table (70, 234b) in which a relation between the total value of the scores and the fall risk degree (D) is determined, based on the second fall information.

6. The in-vehicle fall prevention device (52) according to any one of claims 1 to 5, wherein
the risk degree determination (58, 240) unit transmits the determined fall risk degree (D) to an external system that determines an operation mode of the vehicle.

7. The in-vehicle fall prevention device (52) according to any one of claims 1 to 6, wherein
the control unit outputs guide information that makes the user take the boarding posture corresponding to the fall risk degree (D), in a case where there is the user whose boarding posture corresponding to the fall risk degree (D) is not satisfied.

## Patentansprüche

1. Fahrzeuginterne Sturzpräventions-Vorrichtung (52), umfassend:

eine Erfassungseinheit (54, 236), die ein aufgenommenes Bild erfasst, das durch Bildgebung von Einsteigbewegungen eines jeden von mehreren Benutzern (M, Ma) erhalten wird, wenn die Benutzer auf einen gestuften Teil (218) auftreten und in ein Fahrzeug (10, 210, 300) einsteigen, in welches die Benutzer ein- und daraus aussteigen können,
eine Fähigkeits-Abschätzungseinheit (56, 238), welche einen physischen Fähigkeitswert für jeden der Benutzer auf Grundlage der aufgenommenen Einsteigbewegung abschätzt,
eine Risikograd-Bestimmungseinheit (58, 240), die einen Sturzrisikograd (D) des Benutzers auf Grundlage des physischen Fähigkeitswerts bestimmt,
eine Bestimmungseinheit (60), die bestimmt, ob eine Einstiegshaltung entsprechend dem Sturzrisikograd (D) für jeden der Benutzer, die in das Fahrzeug eingestiegen sind, erfüllt ist oder nicht, und
eine Steuereinheit (62), die eine Abfahrtssteuerung des Fahrzeugs auf Grundlage eines Bestimmungsergebnisses der Bestimmungseinheit (60) ausführt.

2. Fahrzeuginterne Sturzpräventions-Vorrichtung (52) nach Anspruch 1, wobei
die Fähigkeits-Abschätzungseinheit (56, 238) auf eine Objekt-Speichereinheit (68, 234a) referiert, die Bewegungsmerkmal- Objekten mit Bewertungen für jede Bewegung speichert, die der Benutzer während des Einsteigens ausführen kann, und den physischen Fähigkeitswert aus einem Gesamtwert (s) der Bewertungen der Bewegungsmerkmal- Objekte abschätzt, die der Bewegung entsprechen, die der Benutzer während des Einsteigens ausgeführt hat.

3. Fahrzeuginterne Sturzpräventions-Vorrichtung (52) nach Anspruch 1, wobei die Fähigkeits-Abschätzungseinheit (56, 238) den physischen Fähigkeitswert unter Verwendung einer Modellformel abschätzt, die auf Grundlage eines Bewegungsindikators bestimmt wird, der darauf hinweist, dass eine Bewegung unter Bewegungen, die der Benutzer während des Einsteigens ausführen kann, einen hohen Einflussgrad auf den physischen Fähigkeitswert aufweist.

4. Fahrzeuginterne Sturzpräventions-Vorrichtung (52) nach Anspruch 2, ferner umfassend:

eine erste Sturz-Speichereinheit (72a), die erste Sturzinformationen speichert, in welchen der Sturzrisikograd (D) einer stürzenden Person und das Bewegungsmerkmal- Objekt miteinander assoziiert werden, wenn der physische Fähigkeitswert abgeschätzt wird, in einem Fall, bei dem die Abfahrtssteuerung des Fahrzeugs auf Grundlage des Bestimmungsergebnisses der Bestimmungseinheit (60) ausgeführt wird und ein Sturz auftritt, wobei

die Fähigkeits-Abschätzungseinheit (56, 238) die Bewertung für jedes der Bewegungsmerkmal- Objekte, die in der Objekt-Speichereinheit gespeichert sind, auf Grundlage der ersten Sturzinformationen ändert.

5. Fahrzeuginterne Sturzpräventions-Vorrichtung nach Anspruch 2, ferner umfassend:

eine zweite Sturz-Speichereinheit (72b), die zweite Sturzinformationen speichert, in welchen der Sturzrisikograd (D) einer stürzenden Person und der Gesamtwert der Bewertungen miteinander assoziiert werden, wenn der physische Fähigkeitswert abgeschätzt wird, in einem Fall, bei dem die Abfahrtssteuerung des Fahrzeugs auf Grundlage des Bestimmungsergebnisses der Bestimmungseinheit (60) ausgeführt wird und ein Sturz auftritt, wobei

die Risikograd-Abschätzungseinheit (58, 240) eine Beziehungstabelle (70, 234b), in welcher eine Beziehung zwischen dem Gesamtwert der Bewertungen und dem Sturzrisikograd (D) bestimmt wird, auf Grundlage der zweiten Sturzinformationen ändert und speichert.

6. Fahrzeuginterne Sturzpräventions-Vorrichtung (52) nach einem der Ansprüche 1 bis 5, wobei die Risikograd-Bestimmungseinheit (58, 240) den bestimmten Sturzrisikograd (D) an ein externes System überträgt, das einen Betriebsmodus des Fahrzeugs bestimmt.

7. Fahrzeuginterne Sturzpräventions-Vorrichtung (52) nach einem der Ansprüche 1 bis 6, wobei die Steuereinheit in einem Fall eines Benutzers, dessen Einstiegshaltung entsprechend dem Sturzrisikograd (D) nicht erfüllt ist, Führungsinformationen ausgibt, die den Benutzer veranlassen, die Einstiegshaltung entsprechend dem Sturzrisikograd (D) einzunehmen.

## Revendications

1. Dispositif de prévention des chutes à bord d'un véhicule (52) comprenant :

une unité d'acquisition (54, 236) qui acquiert une image capturée obtenue en prenant des images de mouvements d'embarquement de chacun d'une pluralité d'utilisateurs (M, Ma) lorsque les utilisateurs montent sur une partie en escalier (218) et embarquent dans un véhicule (10, 210, 300) dans lequel les utilisateurs peuvent monter et duquel ils peuvent descendre ;
une unité d'estimation de capacité (56, 238) qui estime une valeur de capacité physique pour chacun des utilisateurs sur la base du mouvement d'embarquement capturé ;
une unité de détermination de degré de risque (58, 240) qui détermine un degré de risque de chute (D) de l'utilisateur sur la base de la valeur de capacité physique ;
une unité de détermination (60) qui détermine si une posture d'embarquement correspondant au degré de risque de chute (D) est satisfaite ou non, pour chacun des utilisateurs qui ont embarqué dans le véhicule ; et
une unité de commande (62) qui exécute une commande de départ du véhicule sur la base d'un résultat de détermination de l'unité de détermination (60).

2. Dispositif de prévention des chutes à bord d'un véhicule (52) selon la revendication 1, dans lequel l'unité d'estimation de capacité (56, 238) fait référence à une unité de stockage d'éléments (68, 234a) qui stocke des éléments de caractéristiques de mouvement avec des scores pour chaque mouvement que l'utilisateur est capable d'effectuer pendant l'embarquement, et estime la valeur de capacité physique à partir d'une valeur totale (s) des scores des éléments de caractéristiques de mouvement correspondant au mouvement effectué par l'utilisateur pendant l'embarquement.

3. Dispositif de prévention des chutes à bord d'un véhicule (52) selon la revendication 1, dans lequel l'unité d'estimation de capacité (56, 238) estime la valeur de capacité physique en utilisant une formule modèle déterminée sur la base d'un indicateur de mouvement indiquant un mouvement ayant un degré élevé d'influence sur la valeur de capacité physique parmi les mouvements que l'utilisateur est capable d'effectuer pendant l'embarquement.

4. Dispositif de prévention des chutes à bord d'un véhicule (52) selon la revendication 2, comprenant en outre :

   une première unité de stockage de chute (72a) qui stocke des premières informations de chute dans lesquelles le degré de risque de chute (D) d'une personne qui chute et l'élément de caractéristique de mouvement lors de l'estimation de la valeur de capacité physique sont associés l'un à l'autre, dans un cas où la commande de départ du véhicule est exécutée sur la base du résultat de détermination de l'unité de détermination (60) et où une chute se produit, dans lequel
   l'unité d'estimation de capacité (56, 238) change le score pour chacun des éléments de caractéristiques de mouvement stocké dans l'unité de stockage d'éléments sur la base des premières informations de chute.

5. Dispositif de prévention des chutes à bord d'un véhicule selon la revendication 2, comprenant en outre :

   une deuxième unité de stockage de chute (72b) qui stocke des deuxièmes informations de chute dans lesquelles le degré de risque de chute (D) d'une personne qui chute et la valeur totale des scores lors de l'estimation de la valeur de capacité physique sont associés l'un à l'autre, dans un cas où la commande de départ du véhicule est exécutée sur la base du résultat de détermination de l'unité de détermination (60) et où une chute se produit, dans lequel
   l'unité de détermination de degré de risque (58, 240) change et stocke une table de relation (70, 234b) dans laquelle une relation entre la valeur totale des scores et le degré de risque de chute (D) est déterminée, sur la base des deuxièmes informations de chute.

6. Dispositif de prévention des chutes à bord d'un véhicule (52) selon l'une quelconque des revendications 1 à 5, dans lequel l'unité de détermination de degré de risque (58, 240) transmet le degré de risque de chute (D) déterminé à un système externe qui détermine un mode de fonctionnement du véhicule.

7. Dispositif de prévention des chutes à bord d'un véhicule (52) selon l'une quelconque des revendications 1 à 6, dans lequel l'unité de commande délivre des informations de guidage qui font prendre à l'utilisateur la posture d'embarquement correspondant au degré de risque de chute (D), dans le cas de la présence de l'utilisateur dont la posture d'embarquement correspondant au degré de risque de chute (D) n'est pas satisfaite.

FIG.1

EP 3 782 839 B1

## FIG.2

EP 3 782 839 B1

# FIG.3

24, 26, 32      28(28a, 28b)      30

| IMAGING UNIT | PRESSURE SENSOR | GRIP SENSOR |

42a

## CPU

52

### IN-VEHICLE FALL PREVENTION UNIT

| ACQUISITION UNIT | ~54 |

| DETERMINATION UNIT | ~60 |

ABILITY ESTIMATION UNIT ~56
ESTIMATION UNIT ~56a
SCORE CHANGE UNIT ~56b

CONTROL UNIT ~62
TRAVEL CONTROL UNIT ~62a
GUIDE INFORMATION CONTROL UNIT ~62b

RISK DEGREE DETERMINATION UNIT ~58
DETERMINATION UNIT ~58a
RELATION CHANGE UNIT ~58b

TRANSMISSION/ RECEPTION UNIT ~64

OUTPUT UNIT ~66

| ROM | RAM |

42b      42c

42f

### SSD

68      72

ITEM STORAGE UN

70

RELATION TABLE STORAGE UNIT

FALL STORAGE UNIT
FIRST FALL STORAGE UNIT ~72a
SECOND FALL STORAGE UNIT ~72b

# FIG.4

| SCORE VALUE | MOTION FEATURE ITEM |
|---|---|
| 3 | • PUT HAND ON HANDRAIL BEFORE PUTTING FOOT ON STEP<br>• MOTION IS STOPPED ONCE ONE FOOT IS PUT ON STEP<br>• LEANING DEGREE OF BODY TOWARD HANDRAIL IS LARGE<br>• MOTION IS STOPPED ONCE AFTER COMPLETION OF BOARDING<br>• THERE IS CHANGE IN REARWARD LEANING POSTURE AT START OF GETTING ON |
| 2 | • GET ON WHILE USING HANDRAIL<br>• COMPLETION OF BOARDING TAKES TIME EQUAL TO OR GREATER THAN SPECIFIED TIME T2<br>• FIRST STEP AFTER GETTING ON IS EQUAL TO OR LESS THAN SPECIFIED WIDTH W2<br>• STRIDE AFTER BOARDING IS EQUAL TO OR GREATER THAN SPECIFIED DISTANCE M1<br>• AMOUNT OF CHANGE IN FORWARD LEANING POSTURE AT START OF GETTING ON IS EQUAL TO OR GREATER THAN SPECIFIED AMOUNT L2<br>• AMOUNT OF CHANGE IN CENTER OF GRAVITY OF BODY WHILE GETTING ON IS EQUAL TO OR GREATER THAN SPECIFIED AMOUNT G2 |
| 1 | • AMOUNT OF CHANGE IN FORWARD LEANING POSTURE AT START OF GETTING ON IS EQUAL TO OR GREATER THAN SPECIFIED AMOUNT L1<br>• AMOUNT OF CHANGE IN CENTER OF GRAVITY OF BODY DURING BOARDING IS EQUAL TO OR GREATER THAN SPECIFIED AMOUNT G1<br>• GO UP STEPS ONE AT TIME |
| 0 | • NOT USING HANDRAIL<br>• TIME REQUIRED FOR GETTING ON IS WITHIN SPECIFIED TIME T1<br>• FIRST STEP AFTER GETTING ON IS EQUAL TO OR GREATER THAN SPECIFIED WIDTH W1 |

## FIG.5

| TOTAL SCORE VALUE S | FALL RISK DEGREE D | MONITORING TARGET | VEHICLE DEPARTURE POSSIBILITY DETERMINATION CONDITION K (BOARDING POSTURE) |
|---|---|---|---|
| S3 ≦ s | 4 | ○ | SIT |
| S2 ≦ s < S3 | 3 | | SIT OR GRIP HANDRAIL |
| S1 ≦ s < S2 | 2 | | NO MOVEMENT |
| s < S1 | 1 | | AFTER BOARDING, SPECIFIED TIME HAS ELAPSED |

## FIG.6

| PHYSICAL ABILITY INDEX P (SCORE VALUE) | FALL RISK DEGREE D | MONITORING TARGET | VEHICLE DEPARTURE POSSIBILITY DETERMINATION CONDITION K (BOARDING POSTURE) |
|---|---|---|---|
| EQUAL TO OR LESS THAN 1.0 | 4 | ○ | SIT |
| EQUAL TO OR GREATER THAN 1.0 AND LESS THAN 2.0 | 3 | | SIT OR GRIP HANDRAIL |
| EQUAL TO OR GREATER THAN 2.0 AND LESS THAN 3.0 | 2 | | NO MOVEMENT |
| EQUAL TO OR GREATER THAN 3.0 | 1 | | AFTER BOARDING, SPECIFIED TIME HAS ELAPSED |

# FIG.7

START

DETECT GETTING-ON MOTION —S100

COLLATE MOTIONS AND ESTIMATE PHYSICAL ABILITY VALUE —S102

DETERMINE FALL RISK DEGREE —S104

S106
IS FALL RISK DEGREE DETERMINED AS MONITORING TARGET ? —— NO

YES

S110
OUTPUT GUIDE INFORMATION

S108
NO ── IS BOARDING POSTURE SATISFIED ?

YES

S112
NO ── HAS CONFIRMATION OF ALL USERS WHO GET ON BEEN COMPLETED?

YES

OUTPUT SIGNAL FOR PERMITTING DEPARTURE —S114

DEPARTURE CONTROL —S116

END

*FIG.8*

224 PRESSURE SENSOR

222 GRIP SENSOR

212 REMOTE MONITORING SYSTEM

200 FALL PREVENTION INFORMATION PROVIDING DEVICE

210

214

214a

216

220(222)

214b

214c

218(224)

M

M

EP 3 782 839 B1

# FIG.9

216
IMAGING UNIT

224
PRESSURE SENSOR

222
GRIP SENSOR

200

226

CPU                                              228

FALL PREVENTION INFORMATION PROVIDING UNIT

ACQUISITION UNIT ~236

RISK DEGREE DETERMINATION UNIT ~240
DETERMINATION UNIT ~240a
RELATION CHANGE UNIT ~240b

ABILITY ESTIMATION UNIT ~238
ESTIMATION UNIT ~238a
SCORE CHANGE UNIT ~238b

OUTPUT UNIT ~242

ROM

RAM

234

SSD          234a

ITEM STORAGE UNIT

234c

234b

RELATION TABLE STORAGE UNIT

FALL INFORMATION STORAGE UNIT

230

232

# FIG.10

| SCORE VALUE | MOTION FEATURE ITEM |
|---|---|
| 3 | • PUT HAND ON HANDRAIL BEFORE PUTTING FOOT ON STEPPED PART<br><br>• MOTION IS STOPPED ONCE ONE FOOT IS PUT ON STEPPED PART<br><br>• LEANING DEGREE OF BODY TOWARD HANDRAIL IS LARGE<br><br>• MOTION IS STOPPED ONCE AFTER COMPLETION OF ASCENDING AND DESCENDING MOTION<br><br>• THERE IS CHANGE IN FORWARD AND REARWARD LEANING POSTURE AT START OF ASCENDING AND DESCENDING MOTION |
| 2 | • TAKE ASCENDING AND DESCENDING MOTION WHILE USING HANDRAIL<br><br>• COMPLETION OF ASCENDING AND DESCENDING MOTION TAKES TIME EQUAL TO OR GREATER THAN SPECIFIED TIME T2<br><br>• FIRST STEP AFTER ASCENDING AND DESCENDING MOTION IS EQUAL TO OR LESS THAN SPECIFIED WIDTH W2<br><br>• STRIDE AFTER ASCENDING AND DESCENDING MOTION IS EQUAL TO OR GREATER THAN SPECIFIED DISTANCE M1<br><br>• AMOUNT OF CHANGE IN FORWARD AND REARWARD LEANING POSTURE AT START OF ASCENDING AND DESCENDING MOTION IS EQUAL TO OR GREATER THAN SPECIFIED AMOUNT L2<br><br>• AMOUNT OF CHANGE IN CENTER OF GRAVITY OF BODY DURING ASCENDING AND DESCENDING MOTION IS EQUAL TO OR GREATER THAN SPECIFIED AMOUNT G2 |
| 1 | • AMOUNT OF CHANGE IN FORWARD AND REARWARD LEANING POSTURE AT START OF ASCENDING AND DESCENDING MOTION IS EQUAL TO OR GREATER THAN SPECIFIED AMOUNT L1<br>• AMOUNT OF CHANGE IN CENTER OF GRAVITY OF BODY DURING ASCENDING AND DESCENDING MOTION IS EQUAL TO OR GREATER THAN SPECIFIED AMOUNT G1<br><br>• ASCEND AND DESCEND STEPPED PART ONE AT TIME |
| 0 | • NOT USING HANDRAIL<br><br>• TIME REQUIRED FOR ASCENDING AND DESCENDING MOTION IS WITHIN SPECIFIED TIME T1<br><br>• FIRST STEP AFTER ASCENDING AND DESCENDING MOTION IS EQUAL TO OR GREATER THAN SPECIFIED WIDTH W1 |

## FIG.11

| TOTAL SCORE VALUE S | FALL RISK DEGREE D | MONITORING TARGET |
|---|---|---|
| $S3 \leqq s$ | 4 | ◯ |
| $S2 \leqq s < S3$ | 3 | |
| $S1 \leqq s < S2$ | 2 | |
| $s < S1$ | 1 | |

## FIG.12

| PHYSICAL ABILITY INDEX P (SCORE VALUE) | FALL RISK DEGREE D | MONITORING TARGET |
|---|---|---|
| EQUAL TO OR LESS THAN 1.0 | 4 | ◯ |
| EQUAL TO OR GREATER THAN 1.0 AND LESS THAN 2.0 | 3 | |
| EQUAL TO OR GREATER THAN 2.0 AND LESS THAN 3.0 | 2 | |
| EQUAL TO OR GREATER THAN 3.0 | 1 | |

# FIG.13

START

S200
IS IT CREATION TIMING OF FALL PREVENTION INFORMATION? — NO

YES

ACQUIRE DATA ON ASCENDING AND DESCENDING MOTION — S202

ASSIGN ID — S204

COLLATE MOTIONS AND ESTIMATE PHYSICAL ABILITY VALUE — S206

DETERMINE FALL RISK DEGREE — S208

S210
IS USER MONITORING SUBJECT? — NO

YES

CREATE AND UPDATE FALL PREVENTION INFORMATION — S212

S214
NO — IS THERE REQUEST FOR FALL PREVENTION INFORMATION?

YES

OUTPUT INFORMATION — S216

END

FIG.14

224 PRESSURE SENSOR

222 GRIP SENSOR

200 FALL PREVENTION INFORMATION PROVIDING DEVICE

302 REMOTE MONITORING SYSTEM

300

216

220(222)

304a

304

218(224)

M

M

EP 3 782 839 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102018007432

- JP 2016062414 B